# EUROPEAN PATENT SPECIFICATION

(11) **EP 4 173 353 B1**
(45) Date of publication and mention of the grant of the patent: **23.10.2024**
(21) Application number: 21746146.6
(22) Date of filing: 30.06.2021
(51) Int. Cl.: H04W 24/10, G01S 5/02, H04W 64/00, H04W 76/30

(54) **CONFIGURING ENERGY EFFICIENT POSITIONING MEASUREMENTS**
KONFIGURATION ENERGIEEFFIZIENTER POSITIONIERUNGSMESSUNGEN
CONFIGURATION DE MESURES DE POSITIONNEMENT À FAIBLE CONSOMMATION D'ÉNERGIE

(30) Priority: 30.06.2020 US 202063046527 P
(43) Date of publication of application: 03.05.2023
(73) Proprietor: Lenovo (Singapore) Pte. Ltd., New Tech Park 556741 (SG)
(72) Inventor: THOMAS, Robin, 60489 Frankfurt am Main (DE); CHOI, Hyung-Nam, 85521 Ottobrunn (DE); KUCHIBHOTLA, Ravi, Chicago, Illinois 60680 (US); LOEHR, Joachim, 65203 Wiesbaden (DE); BASU MALLICK, Prateek, 63303 Dreieich (DE)
(74) Representative: Openshaw & Co.
(86) International application number: PCT/IB2021/055888
(87) International publication number: WO 2022/003606

(56) References cited:
- WO-A1-2019/029688
- WO-A1-2020/036525
- US-A1- 2019 230 619
- US-A1- 2020 137 715
- US-A1- 2020 145 955

## Description

### FIELD

The subject matter disclosed herein relates generally to wireless communications and more particularly relates to apparatuses, method, and systems for energy efficient positioning mechanisms. There is disclosed herein a user equipment apparatus and a method performed by a user equipment apparatus.

### BACKGROUND

In certain wireless communication systems, Radio Access Technology ("RAT") dependent positioning using 3GPP New Radio ("NR") technology has been recently supported in Release 16 of the 3GPP specifications. The positioning features include Fifth Generation ("5C") network core architectural and interface enhancements, as well as Radio Access Node ("RAN") functionality that support physical layer and Layer-2/Layer-3 signaling procedures to enable RAT-dependent NR Positioning.

US 2019/230,619 A1 describes the signaling of positioning measurement indications or measurement gap requests.

WO 2019/29688 A1 describes UE autonomous release of an RRC connection to reduce power consumption and signaling overhead.

US 2020/145955 A1 describes an entity measuring downlink position referencing signals (PRS) occasions or uplink position sounding referencing signal occasions for supporting estimating the position of a mobile device, and where bundled PRS occasions may be transmitted with a periodicity that is sufficient to maintain a desired throughput.

### BRIEF SUMMARY

The invention is defined by the appended claims. Claim 1 defines a user equipment apparatus and claim 11 defines a method performed by a user equipment apparatus. In the following, any method and/or apparatus referred to as embodiments but nevertheless do not fall within the scope of the appended claims are to be understood as examples helpful in understanding the invention.

Disclosed are procedures for performing energy efficient positioning. Said procedures may be implemented by apparatus, systems, methods, or computer program products.

One method of a User Equipment ("UE") includes receiving a location information request message, where the request message contains a measurement configuration and a UE autonomous release indication. The method includes performing positioning measurements according to the measurement configuration, transmitting a positioning report to an LMF, and transmitting a UE Autonomous Release signal to the RAN node in response to transmitting the positioning report.

One method of a Location Management Function ("LMF") includes establishing a Long-Term Evolution ("LTE") Protocol Positioning ("LPP") session with a UE, receiving an indication to the LMF for operating in a reduced power mode, and configuring the UE for energy efficient positioning measurements.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for performing energy efficient positioning;
Figure 2 is a block diagram illustrating one embodiment of a 5G New Radio ("NR") protocol stack;
Figure 3 is a diagram illustrating one embodiment of NR Beam-based Positioning;
Figure 4 is a diagram illustrating one embodiment of a network architecture supporting energy efficient UE positioning;
Figure 5 is a diagram illustrating one embodiment of RRC state transition notification;
Figure 6 is a diagram illustrating one embodiment of UE triggered state transition from RRC_IDLE to RRC_CONNECTED;
Figure 7 is a diagram illustrating one embodiment of UE triggered state transition from RRC_INACTIVE to RRC_CONNECTED;
Figure 8 is a diagram illustrating one embodiment of LMF initiated state transition report via AMF;
Figure 9 is a diagram illustrating one embodiment of LMF initiated state transition report directly to NG-RAN via LMF;
Figure 10 is a diagram illustrating one embodiment of RRC state aware measurement configuration signaling procedure;
Figure 11A is a diagram illustrating one embodiment of RRC state aware reporting signaling procedure;
Figure 11B is a continuation of the procedure of Figure 11A;
Figure 12 is a diagram illustrating one embodiment of DL-TDOA Assistance Data;
Figure 13 is a diagram illustrating one embodiment of DL-TDOA Measurement Report;
Figure 14A is a diagram illustrating one embodiment of UE RRC Autonomous release indication procedure after transmission of positioning measurement report;
Figure 14B is a continuation of the procedure of Figure 14A;
Figure 15 is a diagram illustrating one embodiment of NAS-based UE power saving indication for positioning;
Figure 16 is a block diagram illustrating one embodiment of a user equipment apparatus that may be used for energy efficient positioning;
Figure 17 is a block diagram illustrating one embodiment of a network equipment apparatus that may be used for energy efficient positioning;
Figure 18 is a block diagram illustrating one embodiment of a first method for energy efficient positioning; and
Figure 19 is a block diagram illustrating one embodiment of a second method for energy efficient positioning.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C. As used herein, "a member selected from the group consisting of A, B, and C and combinations thereof' includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatuses for performing energy efficient positioning. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

Target device/UE RAT-dependent Positioning using NR technology has been recently supported in Release 16 ("Rel-16") of the 3GPP specifications. The positioning features include 5GC architectural and interface enhancements, as well as Radio Access Node ("RAN") functionality that support physical layer and Layer-2 ("L2") and/or Layer-3 ("L3") signaling procedures to enable RAT-dependent NR Positioning.

In the case of NR and LTE based positioning, for Rel-16 an LTE Protocol Positioning ("LPP") session may only be initiated while the UE is in RRC_CONNECTED state, implying that the position estimates or measurements of a UE can only be obtained once a UE has already established an RRC connection with the base station (e.g., gNB or eNB). However, a key drawback of this approach is that for power-limited UEs (e.g., Internet-of Things ("IoT") devices without access to a power supply) performing cellular-based/RAT-dependent positioning including receiving the positioning assistance data (e.g., positioning-related Reference Signal ("RS") configuration), performing position estimates or measurements and the corresponding reporting would be power consuming procedures. Additionally, there is a lack of coordination between the location server (e.g., LMF) and RAN node (e.g., gNB) to optimize positioning-related procedures in an energy efficient manner for the UE. Further, for Release 17 ("Rel-17"), the different positioning requirements are especially stringent with respect to accuracy, latency and reliability. Table 1 shows positioning performance requirements for different scenarios in an Industrial IoT ("IIoT") or indoor factory setting. Note that augmented reality in smart factories may have a heading positioning performance requirements of < 0.17 radians and mobile control panels with safety functions in smart factories (within factory danger zones) may have a heading positioning performance requirements of < 0.54 radians.

**Table 1: IIoT Positioning Performance Requirements**

| **Scenario** | **Horizontal accuracy** | **Vertical accuracy** | **Availability** | **Latency for position estimation of UE** | **UE Speed** | **Corresponding Positioning Service Level** |
|---|---|---|---|---|---|---|
| Mobile control panels with safety functions (non-danger zones) | <5 m | < 3 m | 90% | < 5 s | N/A | Service Level 2 |
| Process automation - plant asset management | < 1 m | < 3 m | 90% | < 2 s | < 30 km/h | Service Level 3 |
| Flexible, modular assembly area in smart factories (for tracking of tools at the work-place location) | < 1 m (relative positioning ) | N/A | 99 % | 1 s | < 30 km/h | Service Level 3 |
| Augmented reality in smart factories | < 1 m | < 3 m | 99% | < 15 ms | < 10 km/h | Service Level 4 |
| Mobile control panels with safety functions in smart factories (within factory danger zones) | < 1 m | < 3 m | 99.9 % | < 1 s | N/A | Service Level 4 |
| Flexible, modular assembly area in smart factories (for autonomous vehicles, only for monitoring proposes) | < 50 cm | < 3 m | 99 % | 1 s | < 30 km/h | Service Level 5 |
| Inbound logistics for manufacturing (for driving trajectories (if supported by further sensors like camera, GNSS, IMU) of indoor autonomous driving systems)) | < 30 cm (if supported by further sensors like camera, GNSS, IMU) | < 3 m | 99.9 % | 10 ms | < 30 km/h | Service Level 6 |
| Inbound logistics for manufacturing (for storage of goods) | < 20 cm | < 20 cm | 99 % | < 1 s | < 30 km/h | Service Level 7 |

To reduce UE power consumption and signaling overhead for mobile UEs positioning measurements may be supported for UE non-connected states, such as RRC_IDLE and RRC_INACTIVE states. In some embodiments, Early Data Transmission (introduced for IoT) may be used as a mechanism for providing positioning measurement reports for Observed Time Difference Of Arrival ("OTDOA") positioning. However, the lack of Access Stratum ("AS") security may be an issue for the positioning case, where location information is regarded as sensitive information.

In certain embodiments, measurement of the Downlink ("DL") Positioning Reference Signal ("PRS") of a saved configuration may be supported if the PRS is configured for a long duration and repeated with the same periodicity. Additional energy-efficient positioning techniques include periodical monitoring of the positioning System Information Block ("SIB") and paging information. In certain embodiments, positioning-related reporting procedures may use the Physical Random Access Channel ("PRACH") during initial access for transmitting positioning-related information. For example, the 2-step Random Access procedures (aka "RACH Procedures") may be used to support low latency Uplink ("UL")-based positioning.

In certain embodiments, the transmission of the Sounding Reference Signal ("SRS") in UE RRC_IDLE and/or RRC_INACTIVE mode may be enhanced to support UE positioning. In some embodiments, pre-configuration of the PRS and SRS configuration may be used to support UE positioning when transitioning between RRC_IDLE and/or RRC_INACTIVE states.

In certain embodiments, Downlink Time Difference Of Arrival ("DL-TDOA") may use both narrowband and wide band signals in order to support UE positioning with reducing complexity, where the narrowband RS may be used as *a priori* information in order to perform wideband positioning.

UE power saving features have been discussed within the context of the UE Power Saving NR Work Item and UE assistance information has been specified to allow the UE to feedback its preferred configuration, such as Discontinuous Reception ("DRX") configuration, aggregated bandwidth, Secondary Cell ("SCell") configuration, Multiple-Input Multiple-Output ("MIMO") configuration, Radio Resource Control ("RRC") state, minimum scheduling offset values in order for network to assist UE achieving power saving gain. Note that in the following solutions, the UE may measure the PRS outside the active DRX time in the context of transmission and reception of DL-PRS and UL-SRS, measurement accuracy requirements and signaling between UE, gNB and LMF.

The present disclosure describes mechanisms to perform energy efficient positioning. Beneficially, disclosed solution for performing energy efficient positioning can extend a device's battery life in the case of power constraints/limitations. Such solutions may also serve to reduce the transition latency needed to switch to the RRC_IDLE state (or RRC_INACTIVE state) from the RRC_CONNECTED state and initiate an LPP session. This disclosure provides a plurality of mechanisms to enable energy efficient positioning between the network and UE.

In some solutions, the LMF is informed of the RRC state of the UE. Such RRC state awareness enables the LMF to optimize its positioning-related procedures and provide the best positioning measurement configuration based on the UE's operating state, while considering the power capabilities of the UE. This provides a greater degree of flexibility to the UE when performing the positioning measurements and transmitting the corresponding measurement report.

Described herein are network signaling mechanisms that do not require the UE to remain in RRC_CONNECTED state for an unnecessary period of time when receiving a measurement configuration or after reporting a positioning measurement configuration. Furthermore, the UE may also transmit some signaling indication to the LMF of the UE's intention to operate in a reduced power RRC_CONNECTED state. Thereafter, the LMF may optimize its transmissions to the UE. A cell reselection access criterion is also provided so that a UE performing RRC_IDLE/RRC_INACTIVE positioning may not reselect to a cell that does not support the positioning architecture, i.e., connection to an LMF. A signaling method to provide low latency positioning system information updates to UEs performing RRC_IDLE/RRC_INACTIVE positioning is also provided using the Paging Downlink Control Information ("DCI").

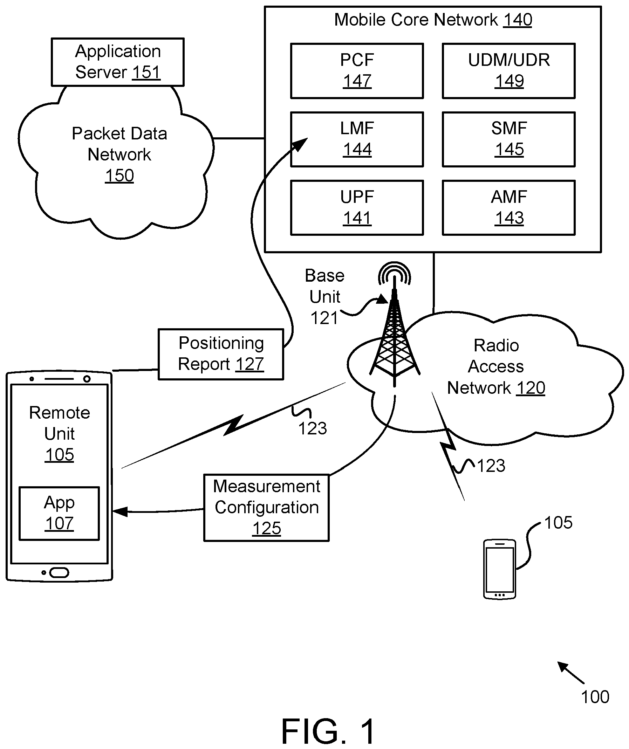

Figure 1 depicts a wireless communication system 100 for performing energy efficient positioning, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 121 with which the remote unit 105 communicates using wireless communication links 123. Even though a specific number of remote units 105, base units 121, wireless communication links 123, RANs 120, and mobile core networks 140 are depicted in Figure 1, one of skill in the art will recognize that any number of remote units 105, base units 121, wireless communication links 123, RANs 120, and mobile core networks 140 may be included in the wireless communication system 100.

In one implementation, the RAN 120 is compliant with the 5G system specified in the Third Generation Partnership Project ("3GPP") specifications. For example, the RAN 120 may be a Next Generation Radio Access Network ("NG-RAN"), implementing New Radio ("NR") Radio Access Technology ("RAT") and/or Long-Term Evolution ("LTE") RAT. In another example, the RAN 120 may include non-3GPP RAT (e.g., Wi-Fi^{®} or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Here, the RAN 120 is an intermediate network that provides the remote units 105 with access to the mobile core network 140. As described in greater detail below, the base unit(s) 121 may provide a cell operating using a first frequency range and/or a cell operating using a second frequency range.

In some embodiments, the remote units 105 communicate with an application server 151 via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the RAN 120. The mobile core network 140 then relays traffic between the remote unit 105 and the application server 151 in the packet data network 150 using the PDU session. The PDU session represents a logical connection between the remote unit 105 and the User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 140 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121. Note that during NR operation on unlicensed spectrum (referred to as "NR-U"), the base unit 121 and the remote unit 105 communicate over unlicensed (i.e., shared) radio spectrum.

In one embodiment, the mobile core network 140 is a 5GC or an Evolved Packet Core ("EPC"), which may be coupled to a packet data network 150, like the Internet and private data networks, among other data networks. A remote unit 105 may have a subscription or other account with the mobile core network 140. In various embodiments, each mobile core network 140 belongs to a single mobile network operator ("MNO"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the RAN 120, a Session Management Function ("SMF") 145, a Location Management Function ("LMF") 147, a Unified Data Management function ("UDM"") and a User Data Repository ("UDR"). Although specific numbers and types of network functions are depicted in Figure 1, one of skill in the art will recognize that any number and type of network functions may be included in the mobile core network 140.

The UPF(s) 141 is/are responsible for packet routing and forwarding, packet inspection, QoS handling, and external PDU session for interconnecting Data Network (DN), in the 5G architecture. The AMF 143 is responsible for termination ofNAS signaling, NAS ciphering & integrity protection, registration management, connection management, mobility management, access authentication and authorization, security context management. The SMF 145 is responsible for session management (i.e., session establishment, modification, release), remote unit (i.e., UE) IP address allocation & management, DL data notification, and traffic steering configuration of the UPF 141 for proper traffic routing.

The LMF 147 receives measurements from RAN 120 and the remote unit 105 (e.g., via the AMF 143) and computes the position of the remote unit 105. The UDM is responsible for generation of Authentication and Key Agreement ("AKA") credentials, user identification handling, access authorization, subscription management. The UDR is a repository of subscriber information and may be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 149.

In various embodiments, the mobile core network 140 may also include a Policy Control Function ("PCF") (which provides policy rules to CP functions), a Network Repository Function ("NRF") (which provides Network Function ("NF") service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), an Authentication Server Function ("AUSF"), or other NFs defined for the 5GC. When present, the AUSF may act as an authentication server and/or authentication proxy, thereby allowing the AMF 143 to authenticate a remote unit 105. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("loT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed.

As discussed in greater detail below, the remote unit 105 receives a measurement configuration 125 from the network (e.g., from the LMF 147 via RAN 120). The remote unit 105 performs positioning measurement, as described in greater detail below, and sends a positioning report to the LMF 147.

While Figure 1 depicts components of a 5G RAN and a 5G core network, the described embodiments for performing energy efficient positioning apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 145 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "RAN node" is used for the base station but it is replaceable by any other radio access node, e.g., gNB, ng-eNB, eNB, Base Station ("BS"), Access Point ("AP"), etc. Further, the operations are described mainly in the context of 5G NR. However, the proposed solutions/methods are also equally applicable to other mobile communication systems supporting performing energy efficient positioning.

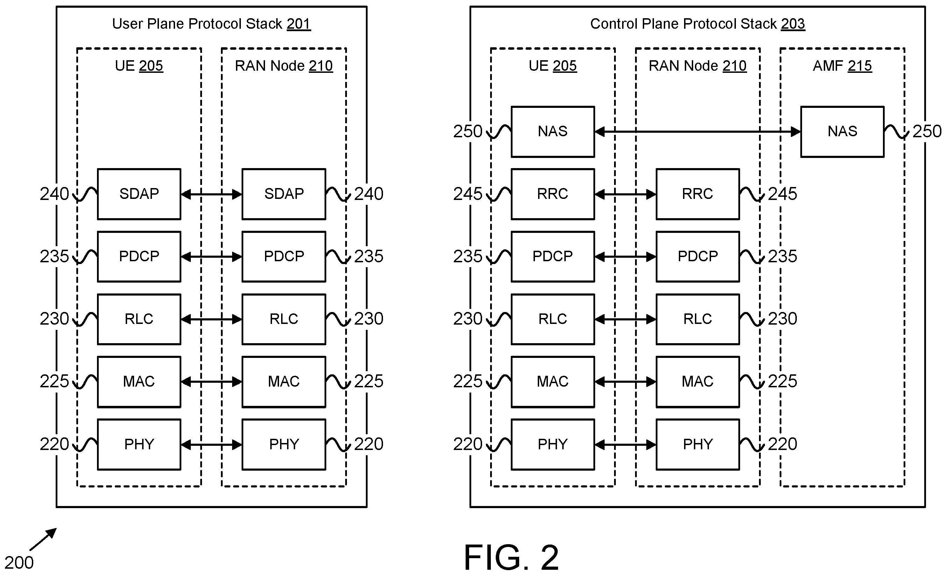

Figure 2 depicts a NR protocol stack 200, according to embodiments of the disclosure. While Figure 2 shows the UE 205, the RAN node 210 and an AMF 215 in a 5G core network ("5GC"), these are representative of a set of remote units 105 interacting with a base unit 121 and a mobile core network 140. As depicted, the protocol stack 200 comprises a User Plane protocol stack 201 and a Control Plane protocol stack 203. The User Plane protocol stack 201 includes a physical ("PHY") layer 220, a Medium Access Control ("MAC") sublayer 225, the Radio Link Control ("RLC") sublayer 230, a Packet Data Convergence Protocol ("PDCP") sublayer 235, and Service Data Adaptation Protocol ("SDAP") layer 240. The Control Plane protocol stack 203 includes a physical layer 220, a MAC sublayer 225, a RLC sublayer 230, and a PDCP sublayer 235. The Control Plane protocol stack 203 also includes a Radio Resource Control ("RRC") layer 245 and a Non-Access Stratum ("NAS") layer 250.

The AS layer (also referred to as "AS protocol stack") for the User Plane protocol stack 201 consists of at least SDAP, PDCP, RLC and MAC sublayers, and the physical layer. The AS layer for the Control Plane protocol stack 203 consists of at least RRC, PDCP, RLC and MAC sublayers, and the physical layer. The Layer-2 ("L2") is split into the SDAP, PDCP, RLC and MAC sublayers. The Layer-3 ("L3") includes the RRC sublayer 245 and the NAS layer 250 for the control plane and includes, e.g., an Internet Protocol ("IP") layer and/or PDU Layer (not depicted) for the user plane. L1 and L2 are referred to as "lower layers," while L3 and above (e.g., transport layer, application layer) are referred to as "higher layers" or "upper layers."

The physical layer 220 offers transport channels to the MAC sublayer 225. The physical layer 220 may perform a Clear Channel Assessment and/or Listen-Before-Talk ("CCA/LBT") procedure using energy detection thresholds, as described herein. In certain embodiments, the physical layer 220 may send a notification of UL Listen-Before-Talk ("LBT") failure to a MAC entity at the MAC sublayer 225. The MAC sublayer 225 offers logical channels to the RLC sublayer 230. The RLC sublayer 230 offers RLC channels to the PDCP sublayer 235. The PDCP sublayer 235 offers radio bearers to the SDAP sublayer 240 and/or RRC layer 245. The SDAP sublayer 240 offers QoS flows to the core network (e.g., 5GC). The RRC layer 245 provides for the addition, modification, and release of Carrier Aggregation and/or Dual Connectivity. The RRC layer 245 also manages the establishment, configuration, maintenance, and release of Signaling Radio Bearers ("SRBs") and Data Radio Bearers ("DRBs").

The NAS layer 250 is between the UE 205 and the 5GC 215. NAS messages are passed transparently through the RAN. The NAS layer 250 is used to manage the establishment of communication sessions and for maintaining continuous communications with the UE 205 as it moves between different cells of the RAN. In contrast, the AS layer is between the UE 205 and the RAN (i.e., RAN node 210) and carries information over the wireless portion of the network.

The present disclosure provides the following high-level conceptual solutions for improving the energy efficiency of a UE when performing positioning-related procedures:
According to a first solution, the LMF is configured to efficiently provision a PRS measurement and UE reporting configuration for a UE (or group of UEs) depending on the RRC state of the UE/group of UEs. Beneficially, this would assist in optimizing the positioning procedures by allowing the LMF to provision the RAT-dependent positioning assistance data to the UE(s) according to the RRC state of each UE. Described herein is an energy efficient mechanism for performing RAT-dependent positioning by allowing the UE to receive a state specific PRS measurement configuration and perform appropriate measurements depending on the UE's active state.

According to a second solution, the UE is permitted to autonomously inform the network (i.e., RAN node or gNB) to release its RRC connection upon completion of an LPP positioning session, e.g., after transmission of a report. Beneficially, UE autonomous release allows reduction of the power consumption and RRC release signaling overhead after the UE transmission of a triggered or periodic positioning measurement report.

According to a third solution, the UE performs cell reselection according to predetermined access criteria, wherein cells without positioning support are excluded from consideration for cell (re)selection. Beneficially, this prevents the UE from considering cells which have an AMF termination that cannot forward data to the serving LMF (limited or no positioning support).

According to a fourth solution, the UE may provide an indication to the LMF of its intention to transition to a reduced power RRC_CONNECTED state, thereby allowing the LMF to consider this UE in a reduced power mode. The LMF can thereafter configure the UE for power efficient positioning measurements techniques, for example by reducing the transmission rate of LPP messages such as RAT-dependent/RAT-independent measurement configurations. Beneficially, the UE may remain in a low-power RRC_CONNECTED state to perform the measurements and complete the reporting of the desired measurements to the location server (e.g., LMF), which is especially beneficial for performing point-to-point positioning.

According to a fifth solution, a low-latency network-configured update mechanism for positioning system information is used for UEs performing RRC_IDLE/RRC_INACTIVE positioning. Beneficially, the UE may rapidly acquire any positioning system information updates when compared to the existing positioning system information broadcast mechanism.

The following RAT-dependent positioning techniques may be supported by the system 100:
DL-TDoA: The DL TDOA positioning method makes use of the DL RS Time Difference ("RSTD") (and optionally DL PRS RS Received Power ("RSRP") of DL PRS RS Received Quality ("RSRQ")) of downlink signals received from multiple TPs, at the UE 205 (i.e., remote unit 105). The UE 205 measures the DL RSTD (and optionally DL PRS RSRP) of the received signals using assistance data received from the positioning server, and the resulting measurements are used along with other configuration information to locate the UE 205 in relation to the neighboring Transmission Points ("TPs").

DL-AoD: The DL Angle of Departure ("AoD") positioning method makes use of the measured DL PRS RSRP of downlink signals received from multiple TPs, at the UE 205. The UE 205 measures the DL PRS RSRP of the received signals using assistance data received from the positioning server, and the resulting measurements are used along with other configuration information to locate the UE 205 in relation to the neighboring TPs.

Multi-RTT: The Multiple-Round Trip Time ("Multi-RTT") positioning method makes use of the UE Receive-Transmit ("Rx-Tx") measurements and DL PRS RSRP of downlink signals received from multiple TRPs, measured by the UE 205 and the gNB Rx-Tx measurements (i.e., measured by RAN node 210) and UL SRS-RSRP at multiple TRPs of uplink signals transmitted from UE 205.

The UE 205 measures the UE Rx-Tx measurements (and optionally DL PRS RSRP of the received signals) using assistance data received from the positioning server, and the TRPs measure the gNB Rx-Tx measurements (and optionally UL SRS-RSRP of the received signals) using assistance data received from the positioning server. The measurements are used to determine the Round Trip Time ("RTT") at the positioning server which are used to estimate the location of the UE 205.

E-CID/ NR E-CID: Enhanced Cell ID (CID) positioning method, the position of a UE 205 is estimated with the knowledge of its serving ng-eNB, gNB and cell and is based on LTE signals. The information about the serving ng-eNB, gNB and cell may be obtained by paging, registration, or other methods. NR Enhanced Cell ID (NR E CID) positioning refers to techniques which use additional UE measurements and/or NR radio resource and other measurements to improve the UE location estimate using NR signals.

Although NR E-CID positioning may utilize some of the same measurements as the measurement control system in the RRC protocol, the UE 205 generally is not expected to make additional measurements for the sole purpose of positioning; i.e., the positioning procedures do not supply a measurement configuration or measurement control message, and the UE 205 reports the measurements that it has available rather than being required to take additional measurement actions.

UL-TDoA: The UL TDOA positioning method makes use of the UL TDOA (and optionally UL SRS-RSRP) at multiple RPs of uplink signals transmitted from the UE 205. The RPs measure the UL TDOA (and optionally UL SRS-RSRP) of the received signals using assistance data received from the positioning server, and the resulting measurements are used along with other configuration information to estimate the location of the UE 205.

UL-AoA: The UL Angle of Arrival ("AoA") positioning method makes use of the measured azimuth and the zenith angles of arrival at multiple RPs of uplink signals transmitted from the UE 205. The RPs measure A-AoA and Z-AoA of the received signals using assistance data received from the positioning server, and the resulting measurements are used along with other configuration information to estimate the location of the UE 205.

Some UE positioning method supported in Rel-16 are listed in Table 2. The separate positioning techniques as indicated in Table 2 may be currently configured and performed based on the requirements of the LMF and/or UE capabilities. Note that Table 2 includes TBS positioning based on PRS signals, but only OTDOA based on LTE signals is supported. The E-CID includes Cell-ID for NR method. The Terrestrial Beacon System ("TBS") method refers to TBS positioning based on Metropolitan Beacon System ("MBS") signals.

**Table 2: Supported Rel-16 UE positioning methods**

| **Method** | **UE-based** | **UE-assisted, LMF-based** | **NG-RAN node assisted** | **Secure User Plane Location ("SUPL")** |
|---|---|---|---|---|
| A-GNSS | Yes | Yes | No | Yes (UE-based and UE-assisted) |
| OTDOA | No | Yes | No | Yes (UE-assisted) |
| E-CID | No | Yes | Yes | Yes for E-UTRA (UE-assisted) |
| Sensor | Yes | Yes | No | No |
| WLAN | Yes | Yes | No | Yes |
| Bluetooth | No | Yes | No | No |
| TBS | Yes | Yes | No | Yes (MBS) |
| DL-TDOA | Yes | Yes | No | No |
| DL-AoD | Yes | Yes | No | No |
| Multi-RTT | No | Yes | Yes | No |
| NR E-CID | No | Yes | FFS | No |
| UL-TDOA | No | No | Yes | No |
| UL-AoA | No | No | Yes | No |

The transmission of Positioning Reference Signals ("PRS") enables the UE 205 to perform UE positioning-related measurements to enable the computation of a UE's location estimate and are configured per Transmission Reception Point ("TRP"), where a TRP may transmit one or more beams.

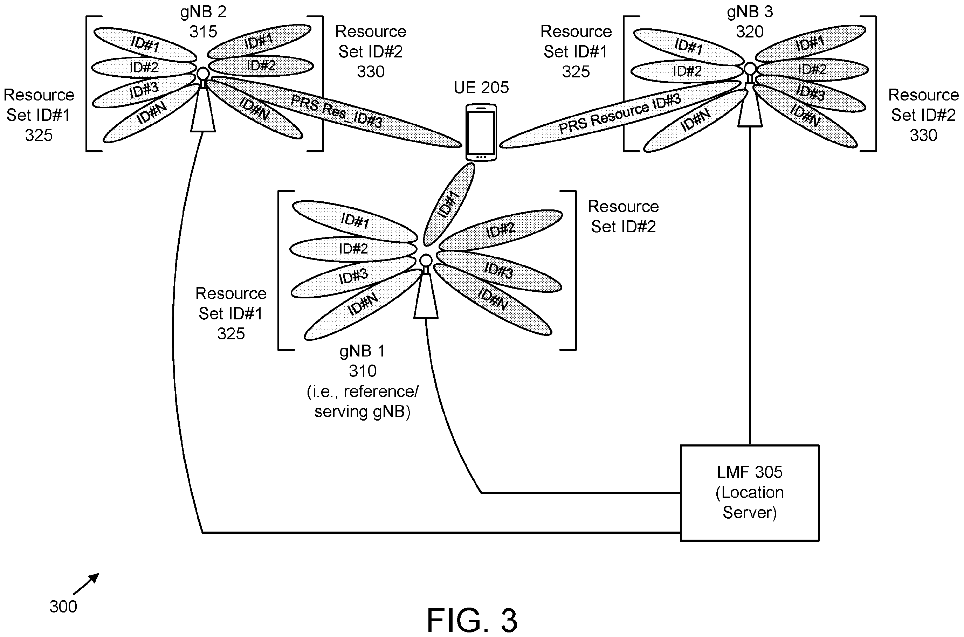

Figure 3 depicts a system 300 for NR beam-based positioning. According to Rel-16, the PRS can be transmitted by different base stations (serving and neighboring) using narrow beams over Frequency Range #1 Between ("FR1", i.e., frequencies from 410 MHz to 7125 MHz) and Frequency Range #2 ("FR2", i.e., frequencies from 24.25 GHz to 52.6 GHz), which is relatively different when compared to LTE where the PRS was transmitted across the whole cell. As illustrated in Figure 3, a UE 205 may receive PRS from a first gNB ("gNB #1) 310 which is a serving gNB, and also from a neighboring second gNB ("gNB #2) 315, and a neighboring third gNB ("gNB #3) 320. Here, the PRS can be locally associated with a PRS Resource ID and Resource Set ID for a base station (i.e., TRP). In the depicted embodiments, each gNB 310, 315, 320 is configured with a first Resource Set ID 325 and a second Resource Set ID 330. As depicted, the UE 205 receives PRS on transmission beams; here, receiving PRS from the gNB #1 310 on PRS Resource ID #1 from the second Resource Set ID 330, receiving PRS from the gNB #2 315 on PSR Resource ID #3 from the second Resource Set ID 330, and receiving PRS from the gNB #3 320 on PRS Resource ID #3 from the first Resource Set ID 325.

Similarly, UE positioning measurements such as Reference Signal Time Difference ("RSTD") and PRS RSRP measurements are made between beams as opposed to different cells as was the case in LTE. In addition, there are additional UL positioning methods for the network to exploit in order to compute the target UE's location. Table 3 lists the RS-to-measurements mapping required for each of the supported RAT-dependent positioning techniques at the UE, and Table 4 lists the RS-to-measurements mapping required for each of the supported RAT-dependent positioning techniques at the gNB.

**Table 1: UE Measurements to enable RAT-dependent positioning techniques**

| **DL/UL Reference Signals** | **UE Measurements** | **To facilitate support of the following positioning techniques** |
|---|---|---|
| Rel-16 DL PRS | DL RSTD | DL-TDOA |
| Rel-16 DL PRS | DL PRS RSRP | DL-TDOA, DL-AoD, Multi-RTT |
| Rel-16 DL PRS / Rel-16 SRS for positioning | UE Rx-Tx time difference | Multi-RTT |
| Rel. 15 SSB / CSI-RS for RRM | SS-RSRP(RSRP for RRM), SS-RSRQ(for RRM), CSI-RSRP (for RRM), CSI-RSRQ (for RRM), SS-RSRPB (for RRM) | E-CID |

**Table 2: gNB Measurements to enable RAT-dependent positioning techniques**

| **DL/UL Reference Signals** | **gNB Measurements** | **To facilitate support of the following positioning techniques** |
|---|---|---|
| Rel-16 SRS for positioning | UL RTOA | UL-TDOA |
| Rel-16 SRS for positioning | UL SRS-RSRP | UL-TDOA, UL-AoA, Multi-RTT |
| Rel-16 SRS for positioning, Rel-16 DL PRS | gNB Rx-Tx time difference | Multi-RTT |
| Rel-16 SRS for positioning, | A-AoA and Z-AoA | UL-AoA, Multi-RTT |

RAT-dependent positioning techniques involve the 3GPP RAT and core network entities to perform the position estimation of the UE, which are differentiated from RAT-independent positioning techniques which rely on Global Navigation Satellite System ("GNSS"), Inertial Measurement Unit ("IMU") sensor, WLAN and Bluetooth technologies for performing target device (i.e., UE) positioning.

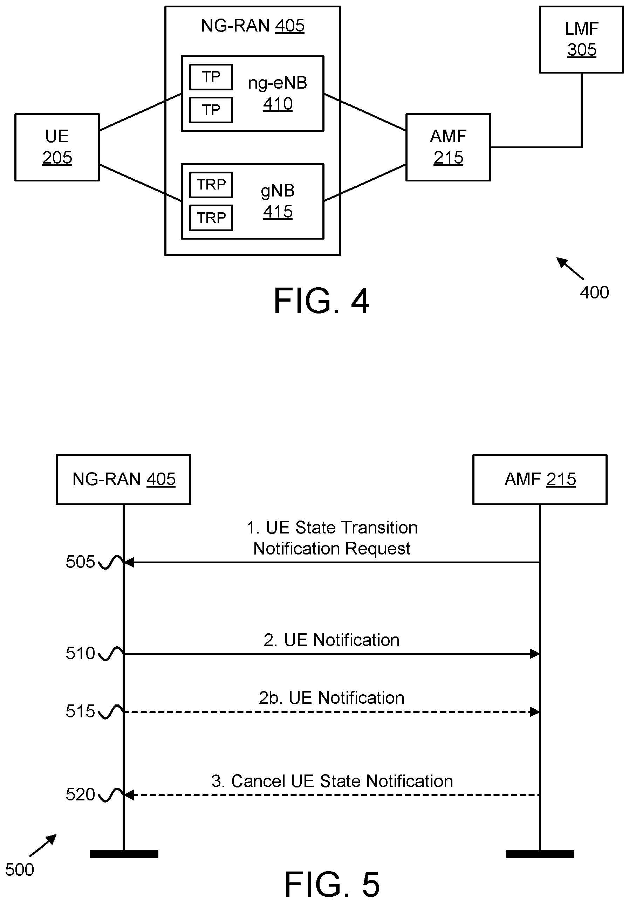

Figure 4 shows an example network architecture 400 supporting energy efficient UE positioning, according to embodiments of the disclosure. The network architecture 400 includes the UE 205 which communicates with a NG-RAN 405 which comprises at least a ng-eNB 410 and a gNB 415. Here, the ng-eNB 410 includes a plurality of Transmission Points ("TPs") while the gNB 415 includes a plurality of Transmission-Reception Points ("TRPs"). In various embodiments, the UE 205 uses an LTE-Uu interface for communicating with the ng-eNB 410 and uses a NR-Uu interface for communicating with the gNB 415. Here, the NR-Uu interface may support an LLP session with the LMF 305 via the AMF 215. Note that the ng-eNB 410 and gNB 415 each have connections to the AMF 215. In certain embodiments, a gNB 415 has a termination to an AMF 215 that can forward the UE 205's positioning measurement reports to the LMF 405. For example, the gNB 415 may support the NR positioning protocol A ("NRPPa") interface to carry the positioning information between the NG-RAN 405 and the LMF 305 over the control plane.

The following procedures may be used for an AMF 215 to request the NG-RAN 405 to report RRC state information, when the target UE 205 is in CM-CONNECTED state. When the AMF 215 has requested reporting of subsequent state changes, the need for the NG-RAN 405 to continue reporting ceases when the UE 205 transitions to CM-IDLE or the AMF 215 sends a cancel indication. This procedure may be used for services that require RRC state information (e.g., 5GC Mobile Terminated ("MT") control and paging assistance, operations/administration and maintenance ("OAM") and collection of statistics), or for subscription to the service by other NFs.

Figure 5 shows an RRC state transition notification procedure 500, according to embodiments of the disclosure. Reporting of RRC state transitions can be requested per UE by the AMF 215. Note that continuous reporting of all RRC state transitions can be enabled by operator local configuration as depicted in Figure 5.

At Step 1, the AMF 215 sends a UE State Transition Notification Request to the NG-RAN 405, e.g., as described in 3GPP TS 38.413. The UE State Transition Notification Request message identifies the UE 205 for which notification(s) are requested. In certain embodiments, the UE State Transition Notification Request message may contain a reporting type that either indicates subsequent state transitions shall be notified at every RRC state transition (e.g., from the RRC_CONNECTED state to the RRC_INACTIVE state, or from the RRC_INACTIVE to RRC_CONNECTED state), or it indicates Single RRC_CONNECTED state notification.

At Step 2, the NG-RAN 405 sends the UE Notification message to report the current RRC state for the UE (i.e., RRC Inactive state or RRC Connected state). In some embodiments, the current UE location information (i.e., Tracking Area Identity ("TAI") + Cell Identity ("Cell-ID" or "CID")) is always included whenever RRC state information is reported.

At Step 2b, when the AMF 215 has requested reporting about subsequent state transitions, the NG-RAN 405 sends subsequent UE Notification messages to the AMF 215 at every RRC state transition until the UE 205 transitions to CM-IDLE or NG-RAN 405 receives a Cancel UE State Notification message from the AMF 215. When the AMF 215 has requested reporting for Single RRC_CONNECTED state notification and the UE 205 is in RRC_CONNECTED state, the NG-RAN 405 may send one UE Notification message but no subsequent messages. If the UE 205 is in RRC_INACTIVE state, the NG-RAN 405 sends one UE Notification message plus one subsequent UE Notification message when RRC state transits to RRC_CONNECTED.

At Step 3, the AMF 215 can send a Cancel UE State Notification message to inform the NG-RAN 405 that it should terminate notifications for a given UE 205. This message should only be used when notification(s) about subsequent state transitions was requested at every RRC state transition.

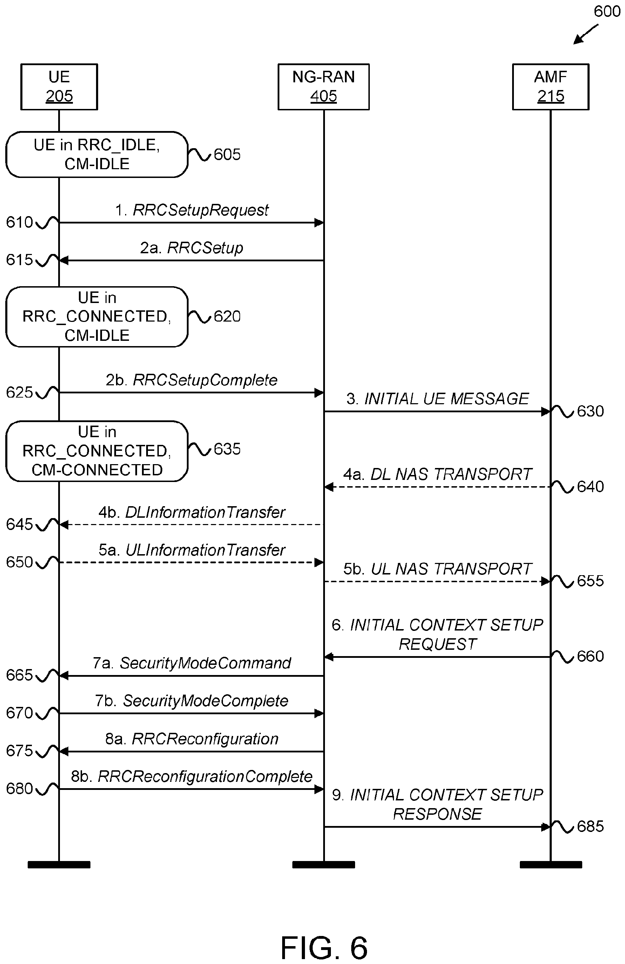

Figure 6 depicts a procedure 600 for UE-triggered state transition between the RRC_IDLE and RRC_CONNECTED states and CM-IDLE and CM-CONNECTED states on the RAN level. The procedure 600 involves the UE 205, the NG-RAN 405 and the AMF 215. As a precondition, the UE 205 is assumed to be in the RRC_IDLE and CM-IDLE states (see block 605). At Step 1, the UE 205 sends an *RRCSetupRequest* message to the NG-RAN 405 (see messaging 610). At Step 2a, the UE 205 receives an *RRCSetup* command from the NG-RAN 405 (see messaging 615). The UE 205 transits to the RRC_CONNECTED state (note that the UE 205 is still in the CM-IDLE state at this time) (see block 620). At Step 2b, the UE 205 sends an *RRCSetupComplete* message to the NG-RAN 405 (see messaging 625).

At Step 3, the NG-RAN 405 sends an Initial UE message to the AMF 215 (see messaging 630). The UE 205 transits to the CM-IDLE state (note that the UE 205 remains in the RRC_CONNECTED state at this time) (see block 635). At Step 4a, the AMF 215 optionally sends to the NG-RAN 405 a Downlink NAS Transport message carrying downlink ("DL") data (see messaging 640). At Step 4b the NG-RAN 405 sends to the UE 205 a *DLInformationTransfer* message to the UE 205 containing the DL data (see messaging 645). At Step 5a the UE 205 optionally sends to the NG-RAN 405 a *ULInformationTransfer* message containing uplink ("UL") data (see messaging 650). At Step 5b, the AMF 215 receives from the NG-RAN 405 an Uplink NAS Transport message carrying the UL data (see messaging 655).

At Step 7a, the NG-RAN 405 sends a *Security Mode Command* message to the UE 205 (see messaging 665). At Step 7b, the UE 205 sends a *SecurityModeComplete* message to the NG-RAN 405 (see messaging 670). At Step 8a, the NG-RAN 405 sends *RRCReconfiguration* message to the UE 205 (see messaging 75). At Step 8b the UE 205 sends an *RRCReconfigurationComplete* message to the NG-RAN 405 (see messaging 680). At Step 9, the AMF 215 receives from the NG-RAN 405 an Initial Context Setup Response message (see messaging 685).

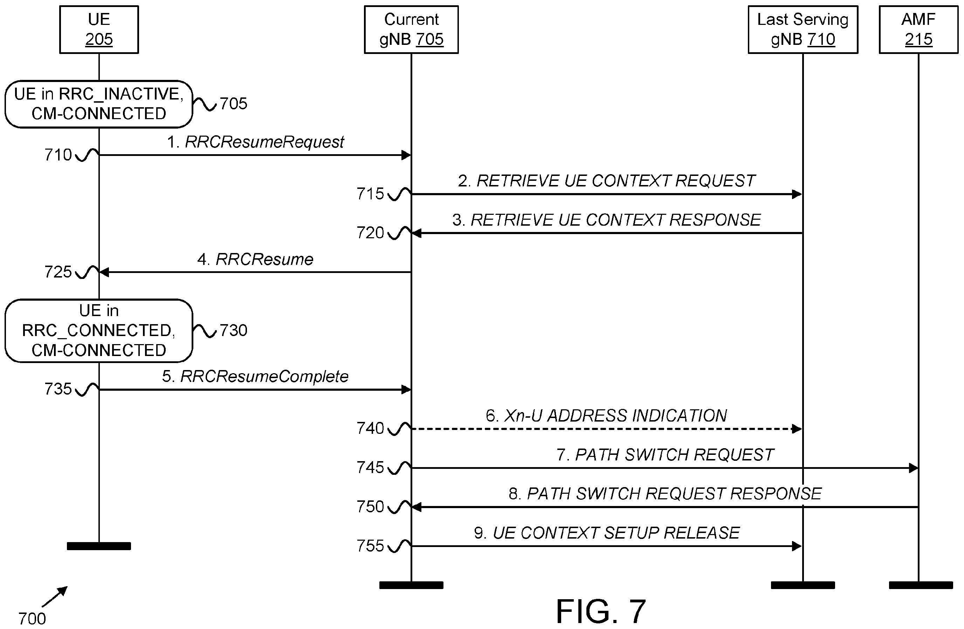

Figure 7 depicts a procedure 700 for UE-triggered state transition from the RRC INACTIVE and RRC_CONNECTED states on the RAN level. Note that the UE 205 remains in the CM-CONNECTED state while in the RRC_INACTIVE state. The procedure 700 involves the UE 205, a current gNB 705, a last serving gNB 710, and the AMF 215. Here, the current gNB 705 and the last serving gNB 710 may be instances of the base unit 121, the RAN node 210, and/or the gNB 415.

As a precondition to Figure 7, the UE 205 is assumed to be in the RRC_INACTIVE and CM-CONNECTED states (see block 705). At Step 1, the UE 205 sends an *RRCResumeRequest* message to the NG-RAN 405 (see messaging 710). At Step 2, the current gNB 705 sends a Retrieve UE Context Request message to the last serving gNB 710 (see messaging 715). At Step 3, the current gNB 705 receives a Retrieve UE Context Response message from the last serving gNB 710 (see messaging 720).

At Step 4, the current gNB 705 sends an *RRCResume* command to the UE 205 (see messaging 725). The UE 205 transits to the RRC_CONNECTED state (note that the UE 205 remains in the RRC_CONNECTED state at this time) (see block 730). At Step 5, the UE 205 sends an *RRCResumeComplete* message to the current gNB 705 (see messaging 735). At Step 6, the current gNB 705 optionally sends a Xn-U Address Indication message to the last serving gNB 710 (see messaging 740).

At Step 7, the current gNB 705 sends a Path Switch Request message to the AMF 215 (see messaging 745). At Step 8, the AMF 215 sends a Path Switch Request Response message to the current gNB 705 (see messaging 750). At Step 9, the current gNB 705 sends a UE Context Setup Release message to the last serving gNB 710 (see message 755).

According to a first solution, a UE 205 may perform RRC-state-based measurement and reporting configuration. The capability to perform energy efficient positioning is especially advantageous for devices with power constraints and small form factors. This can be especially useful for devices in an IoT environment, where device battery life is an important design consideration. It has been well-established that a UE 205 operating in the RRC_CONNECTED state for extended periods of time even without any ongoing data transmissions or measurements to be performed can be inefficient in terms of energy consumption. A key issue of prior art is that there exists no coordination between the LMF 305 and RAN node 210 to perform energy efficient RAT-dependent positioning at the UE 205. The present invention includes embodiments, which aim to address the aforementioned problem when performing RAT-dependent positioning.

According to a first subset of the first solution, the UE 205 receives one or more RRC-state-based measurement configurations. For the case that positioning during RRC_IDLE/RRC_INACTIVE positioning is supported, it is envisioned that the LMF 305 can provision the best measurement and reporting configuration for a particular positioning technique based on the operational states of an identified UE/group of UEs.

A UE 205 currently may perform point-to-point positioning between the LMF 305 and UE 205. The PRS measurement configuration and corresponding reporting is encapsulated as an LPP PDU and transmitted via the RRC DL and UL information transfer messages respectively, which can only be transmitted or received while the UE 205 is in RRC _CONNECTED state. The UE 205 also may receive the PRS assistance data containing the measurement configuration for RAT-dependent positioning via positioning System Information Block ("posSIBs") broadcasted for UEs 205 in RRC_IDLE, or RRC INACTIVE, or RRC_CONNECTED states. Alternatively, the posSIBs may be provided on-demand for UEs 205 in RRC_CONNECTED, or RRC_IDLE, or RRC INACTIVE states.

However, if the measurement configuration of the UE 205 does not account for the state in which the UE 205 is operating, then the configuration may have negative impact for the UE 205's power consumption and/or latency of obtaining the location information.

For example, in the case of positioning applications/service that are characterized by:
- delay-tolerant or low-latency requirements; and/or
- requiring triggered or periodic measurements; or
- not requiring 'always on' reporting; or
- mobility state of the UE, e.g., stationary, low mobility, medium mobility and high mobility, then LMF may provision one or more set of DL PRS-RSRP, DL RSTD, UE Rx - Tx time difference measurement configurations to be measured while the UE 205 is either in RRC_CONNECTED state or RRC IDLE/RRC INACTIVE state, depending on the RAT-dependent positioning technique.

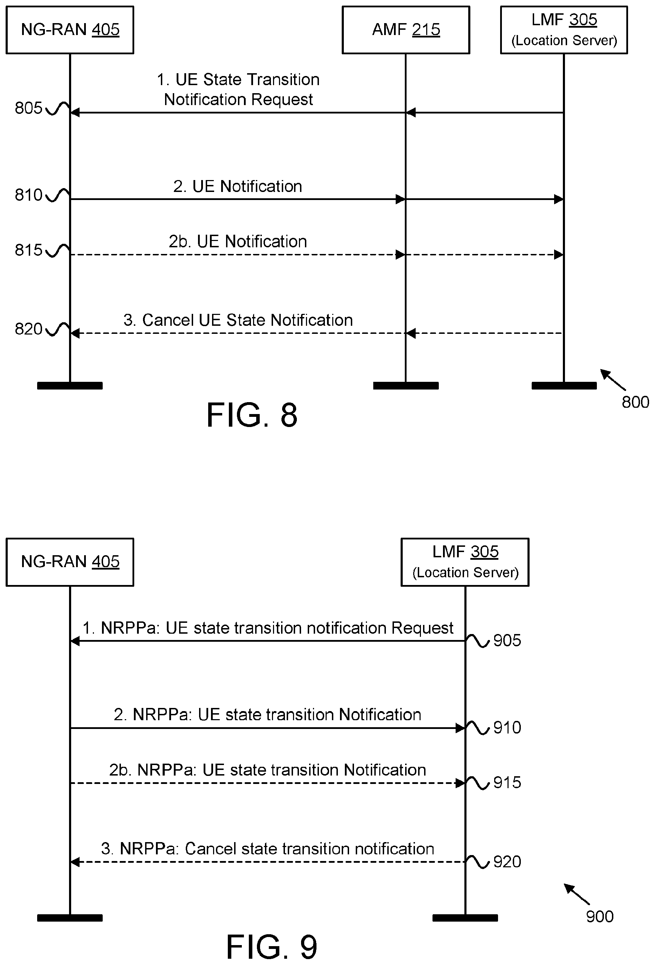

A priori information on whether the target UE 205 has transited to or from RRC_CONNECTED (and CM-CONNECTED state) may be required in order for the LMF 305 to be aware of the UE's state on a RAN level. Currently, the information provided by the LMF 305 is transparent to the RAN node 210 in relation how the measurement and report configuration at least in the case of DL-based positioning methods is transmitted. The LMF 305 may request the NG-RAN 405 to report the RRC state transition per UE 205 from the NG-RAN 405 via the two options depicted in Figures 8 and 9.

Figure 8 depicts a procedure 800 for state transition reporting via the AMF 215, according to embodiments of the disclosure. Figure 8 shows a first option ("reporting Option 1") for reporting the RRC state transition per UE from the NG-RAN. As depicted, the procedure 800 involves the NG-RAN 405, the AMF 215, and the LMF 305. The procedure 800 modifies the reporting mechanism outlined above with reference to Figure 5. Here, LMF 305 (i.e., Location Server)-initiated state transitions reports are sent to the NG-RAN 405 via the AMF 215.

At Step 1, the LMF 305 sends to the AMF 215 a UE State Transition Notification Request which the AMF 215 forwards to the NG-RAN 405 (see messaging 805). At Step 2, the NG-RAN 405 sends to the AMF 215 a UE Notification message to report the current RRC state for the UE 205 (i.e., RRC Inactive state or RRC Connected state), which the AMF 215 forwards to the LMF 305 (see messaging 810).

At Step 2b, when the LMF 305 has requested reporting about subsequent state transitions, the NG-RAN 405 sends subsequent UE Notification messages to the LMF 305 via AMF 215 at every RRC state transition until the UE 205 transitions to CM-IDLE or until the NG-RAN 405 receives a Cancel UE State Notification message from the LMF 305 (see messaging 815).

At Step 3, the LMF 215 can send a Cancel UE State Notification message via the AMF 215 to inform the NG-RAN 405 that it should terminate notifications for a given UE 205 (see messaging 820). This message should only be used when notification(s) about subsequent state transitions was requested at every RRC state transition.

Figure 9 depicts state transition reporting via NRPPa directly to the NG-RAN 405, according to embodiments of the disclosure. Figure 9 shows a second option ("reporting Option 2") for reporting the RRC state transition per UE from the NG-RAN. As depicted, the procedure 900 involves the NG-RAN 405 and the LMF 305. The procedure 900 modifies the reporting mechanism outlined above with reference to Figure 5. Here, the LMF 305 replaces the AMF 215 in state transition reporting. As depicted, LMF-initiated state transitions reports are sent directly to the NG-RAN 405 via the LMF 305.

At Step 1, the LMF 305 sends to the NG-RAN 405 a UE State Transition Notification Request (see messaging 905). At Step 2, the NG-RAN 405 sends to the LMF 305 a UE Notification message to report the current RRC state for the UE 205 (i.e., RRC Inactive state or RRC Connected state) (see messaging 910). At Step 2b, when the LMF 305 has requested reporting about subsequent state transitions, the NG-RAN 405 sends subsequent UE Notification messages to the LMF 305 at every RRC state transition until the UE 205 transitions to CM-IDLE or until the NG-RAN 405 receives a Cancel UE State Notification message from the LMF 305 (see messaging 915).

At Step 3, the LMF 215 can send a Cancel UE State Notification message to inform the NG-RAN 405 that it should terminate notifications for a given UE 205 (see messaging 920). This message should only be used when notification(s) about subsequent state transitions was requested at every RRC state transition.

Although reporting Option 1 uses existing signaling, there will be a delay in reporting since the state transition reporting is requested by the AMF 215 on behalf of the LMF 305. Reporting Option 2 utilizes the NRPPa interface to directly request the state transition report which would be transparent to the AMF 215.

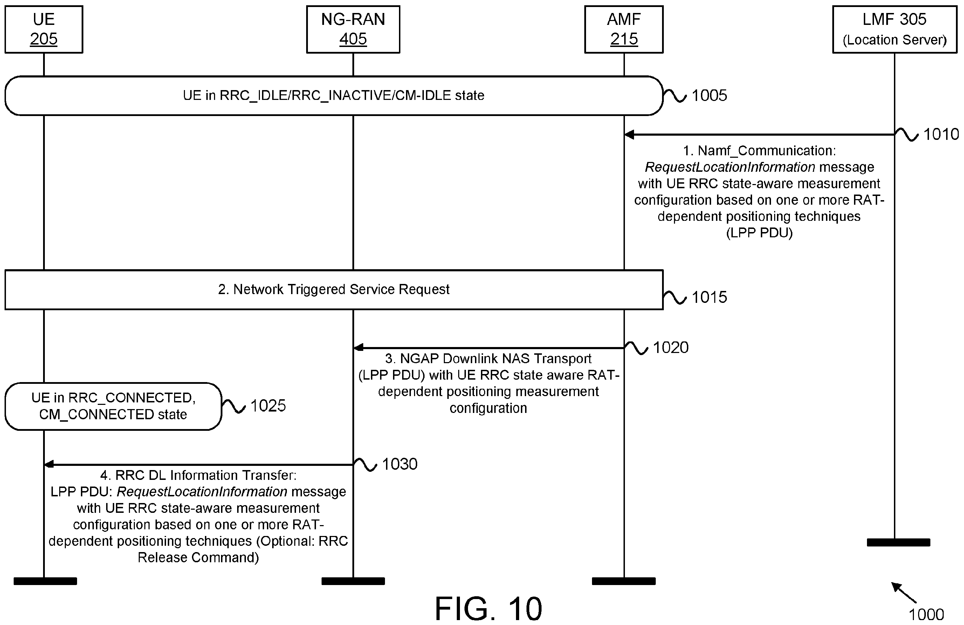

Figure 10 depicts RRC state aware measurement configuration signaling procedure, according to the first subset of the first solution. The procedure 1000 involves the UE 205, the NG-RAN 405, the AMF 215 and the LMF 305. Figure 10 is an exemplary signaling chart of the proposed method for a UE 205 receiving an RRC state aware RAT-dependent measurement configuration when the UE 205 is already in an RRC_IDLE and CM-IDLE state (see block 1005). Note that Figure 10 is application to a point-to-point positioning session between a target UE 205 and LMF 305.

The RRC state aware measurement configuration provides the LMF 305 with the flexibility of providing an optimal measurement configuration to the UE 205 depending on the following exemplary positioning application requirements:
- Positioning application/service requiring extended periodic location updates for power limited UEs;
- Positioning application/service requiring low latency position fixes for power limited UEs; and
- Positioning application/service requiring position fixes for mobile and power limited UEs moving across multiple cells.

Steps 1 to 4 are triggered when the LMF 305 needs to send an LPP message to the UE 205, e.g., as part of an LPP positioning activity. In this case, the positioning activity consists of an LPP location information request message (*RequestLocationInformation*) used by the LMF 305 to request positioning measurements or a position estimate from a target device based on a configured positioning technique, which is RRC-state-aware. At Step 1, the LMF 305 invokes the *Namf_Communication_N1N2MessageTransfer* service operation towards the AMF 215 to request the transfer of a LPP PDU to the UE 205, which may carry the *RequestLocationInformation* message with RRC state aware measurement configuration (see messaging 1010).

At Step 2, the AMF 215 initiates a network-triggered service request (see block 1015). At Step 3, the AMF 215 sends a DL NAS message (e.g., NGAP Downlink NAS Transport message) to the NG-RAN 405 which contains a LPP PDU with an RRC-state-aware, RAT-dependent positioning report configuration (see messaging 1020). Note that the UE 205 transitions from the RRC_IDLE or RRC INACTIVE state to the RRC_CONNECTED state to receive the DL Information Transfer message (see block 1025).

In step 4, the UE 205 receives the NAS PDU measurement configuration via the DL Information Transfer message, which can optionally include an RRC Release command if the LMF 305 requires the UE 205 to perform the measurements in an RRC_IDLE or RRC_INACTIVE state (see messaging 1030). In an alternative implementation, the network may configure a *DataInactivityTimer* which allows the UE 205 to be released after receiving the measurement configuration upon expiration of this timer.

In an exemplary implementation, the super set RRC state aware configuration shown in Figure 10 (provided by LMF 305) may be distinguished by the UE according to: 1) Measurement configuration for RRC_CONNECTED UEs; and/or 2) Measurement configuration for RRC_IDLE/RRC_INACTIVE UEs. In one embodiment, there is a separate sub-measurement configuration for RRC_IDLE UEs. In another embodiment, there is a separate sub-measurement configuration for RRC_INACTIVE UEs.

If the RRC Release command is not included, the UE 205 can follow the RRC_CONNECTED measurement configuration in accordance with the normal measurement procedures while in the RRC_CONNECTED state.

If the RRC Release command is included, the UE 205 can follow the RRC_IDLE/RRC_INACTIVE measurement configuration and perform the positioning-related measurements while in the RRC_IDLE/RRC_INACTIVE state.

In an alternative implementation, a group of UEs may receive the RRC state aware RAT-dependent measurement configuration via broadcast other system information ("OSI") in the form of posSIBs and follow the required configuration based on their individual operating state.

The state-specific measurement configuration can be provided using one of the following exemplary implementations:
The RRC state awareness assistance data may be provided according to separate posSIBs from the LMF 305 in order to distinguish between the different RRC state measurement configurations. An exemplary form of signaling may include the existing posSIB signaling as baseline, shown in Table 5 below. Note that posSibType6-4 supports information element *NR-DL-PRS-AssistanceData_IDLE_INACTIVE* for a UE 205 outside the RRC_CONNECTED state.

**Table 5: RRC state aware PosSIBs**

| | | |
|---|---|---|
| NR DL-TDOA/DL-AoD Assistance Data | *posSibType6-1* | *NR-DL-PRS-AssistanceData (already for connected UEs)* |
| | *posSibType6-2* | *NR-UEB-TRP-LocationData* |
| | *posSibType6-3* | *NR-UEB-TRP-RTD-Info* |
| | *posSibType6-4* | *NR-DL-PRS-AssistanceData_IDLE_INACTIVE* |

An alternative implementation may include separate RRC state measurement configurations contained within a posSIB according to: Measurement configuration applicable to RRC _CONNECTED state; and/or Measurement configuration applicable to RRC IDLE/RRCINACTIVE states.

In another implementation, a UE 205 may request the RRC state aware RAT-dependent measurement configuration via on-demand posSIB (assistance data) in either RRC_CONNECTED or RRC IDLE/RRC INACTIVE state.

Similarly, especially in the case of UE-assisted positioning the reporting configuration can also be configured to be RRC state aware and is described in the next sub-embodiment.

Regarding RRC-state-based measurement configuration, according to a second subset of the first solution, the UE 205 receives RRC-state-based measurement configuration. Here, the reporting configuration may also be made to be RRC state aware depending on whether the LMF 305 requires the report to be transmitted while remaining in RRC _CONNECTED state (e.g., using the *ULInformationTransfer* message) or after the UE 205 has performed the required measurements outside the RRC_CONNECTED state (i.e., while in the RRC_IDLE or RRC INACTIVE states).

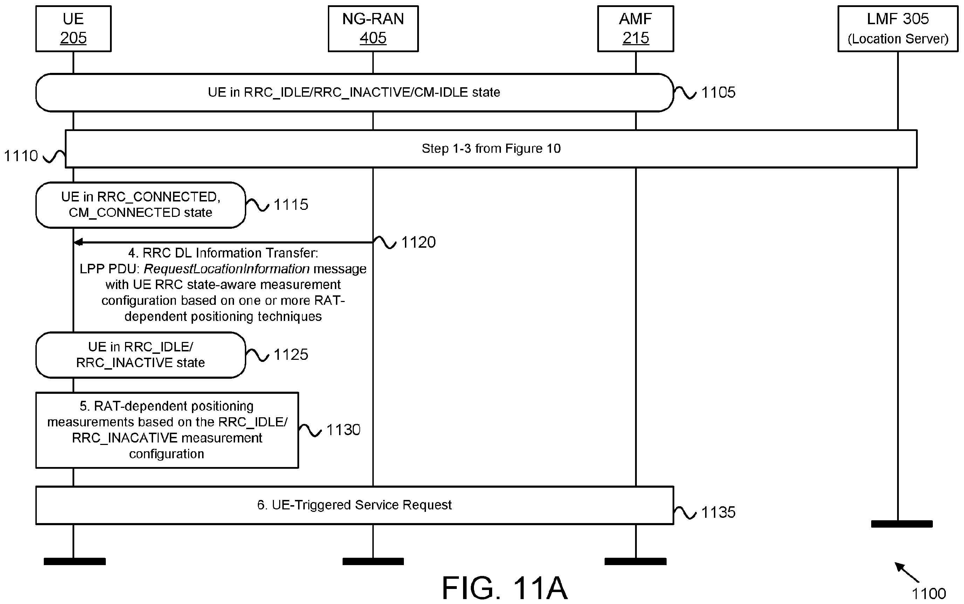

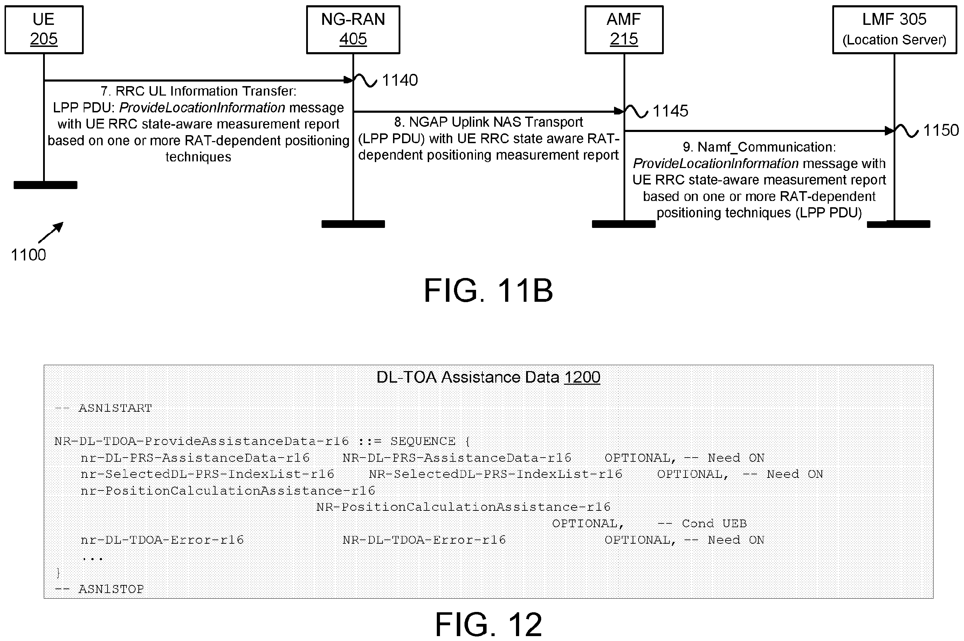

Figures 11A-11B depict RRC state aware measurement configuration signaling procedure, according to the second subset of the first solution. Figure 11A is an exemplary signaling chart of RRC state aware reporting signaling procedure. Figure 11B is a continuation of the procedure shown in Figure 11A.

At Figure 11A, as a precondition, it is assumed that the UE 205 is in the RRC_IDLE state, the RRC_INACTIVE state, and/or the CM-IDLE state (see block 1105). Steps 1-3 follow steps 1-3 of Figure 10 (see block 1110). Specifically, at Step 1, the LMF 305 uses a Namf service operation (e.g., Namf_Communication) to send a location information request message (i.e., *RequestLocationInformation*) to the AMF 215 which, at Step 2, initiates a network-triggered service request. As depicted, the location information request message contains a LPP PDU with an RRC-state-aware, RAT-dependent positioning report configuration. At Step 3, the AMF 215 sends a DL NAS message (e.g., NGAP Downlink NAS Transport message) to the NG-RAN 405 which contains a LPP PDU with an RRC-state-aware, RAT-dependent positioning report configuration.

At Step 4, the UE 205 receives the LPP PDU measurement configuration via a DL Information Transfer message, which may contain a super set RRC state aware configuration as described above (see messaging 1120). Note that the UE 205 transitions from the RRC_IDLE or RRC_INACTIVE state to the RRC_CONNECTED state to receive the DL Information Transfer message (see block 1115).

In certain embodiments, the UE is to provide a positioning measurement report after performing measurements in the RRC_CONNECTED state (referred to as Option A). However, in the depicted embodiment, it is assumed that the UE 205 is to provide a positioning measurement report after performing measurements outside the RRC _CONNECTED state (referred to as Option B). Furthermore, if the super set configuration RRC state aware configuration is provided to the UE an additional flag may be encapsulated in Steps 7-9 indicating to the LMF whether the positioning measurements were made in either of the RRC states, i.e., RRC_IDLE/RRC_INACTIVE/RRC_CONNECTED states. This assists the LMF in tracking the measurement reports from the UE, especially if the measurement configurations between the RRC_CONNECTED and RRC_IDLE/RRC_INACTIVE states are significantly different. Accordingly, the UE transitions from the RRC_IDLE or RRC_INACTIVE state to the RRC_CONNECTED state to receive the DL Information Transfer message (see block 1125).

At Step 5, the UE 205 performs the RAT-dependent positioning measurements outside the RRC_CONNECTED state based on the received measurement configuration (see block 1130). In one embodiment, the UE 205 enters the RRC_IDLE state and performs measurements according to a measurement configuration applicable to RRC_IDLE state. In another embodiment, the UE 205 enters the RRC_INACTIVE state and performs measurements according to a measurement configuration applicable to RRC_INACTIVE state. Note that the RAT-dependent positioning measurements may be based on the RRC_IDLE or RRC_INACTIVE measurement configuration (i.e., part of the RRC-state-aware RAT-dependent positioning measurement and report configuration received in Step 4).

At Step 6, the UE 205 initiates a UE-triggered service request (see block 1135). Continuing on Figure 11B, at step 7 the UE 205 sends a UL Information Transfer message with a UE RRC-state-aware measurement report based on one or more RAT-dependent positioning techniques, according to the received measurement configuration (see messaging 1140).

At Step 8, the NG-RAN 405 sends a UL NAS message to the AMF 215 which contains an LPP PDU with the UE measurement report (see messaging 1145). At Step 9, the AMF 215 sends a location information response message to the LMF 305 containing the LPP PDU (see messaging 1150).

Because parallel LPP transactions are supported identified by transaction IDs, the LPP procedures are not required to occur in any fixed order, in order to provide greater flexibility in positioning as follows:
- A UE may request assistance data at any time in order to comply with a previous request for location measurements from the LMF;
- an LMF may initiate more than one request for location information (e.g., measurements or a location estimate) in case location results from a previous request were not adequate for the requested QoS; and
- the target device may transfer capability information to the server at any time if not already performed

As described above, UE measurements which are applicable to DL-based positioning techniques are reported to a location server, such as the LMF 147. The LMF 147 may provide assistance data configurations and measurement information are provided for each of the supported positioning techniques discussed above.

Figure 12 depicts one example of an Information Element 1200, i.e., *NR-DL-TDOA-ProvideAssistanceData*, used by the location server to provide an assistance data configuration to enable UE-assisted and UE-based NR downlink TDOA. The depicted Information Element ("IE") may also be used to provide NR DL TDOA positioning specific error reason.

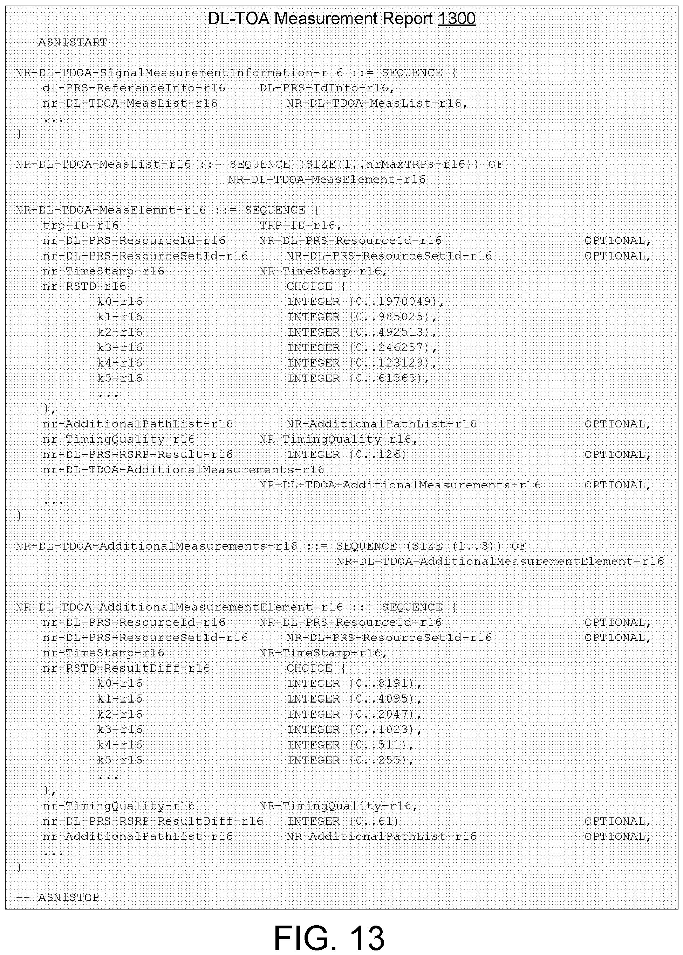

Figure 13 shows one example of an Information Element 1300, i.e., *NR-DL-TDOA-SignalMeasurementInformation,* used by the target device (i.e., UE 205) to provide NR-DL TDOA measurements to the location server. The measurements are provided as a list of TRPs, where the first TRP in the list is used as reference TRP in case RSTD measurements are reported. The first TRP in the list may or may not be the reference TRP indicated in the *NR-DL-PRS-AssistanceData.* Furthermore, the target device selects a reference resource per TRP, and compiles the measurements per TRP based on the selected reference resource.

According to embodiments of the second solution, UE 205 may autonomously perform RRC Release for positioning-related procedures. While the first solution describes an optional network-initiated RRC Release command to release the UE 205 after receiving the measurement configuration from the LMF 305 in order to perform the positioning RS measurements in RRC_IDLE/RRC_INACTIVE state and when the UE 205 is expecting no further positioning measurement configurations for a period of time, the UE 205 can save time and resources when UE autonomous RRC release is supported. The NG-RAN 405 and LMF 305 require a coordinated NAS and AS indication to also enable the UE 205 to autonomously release the RRC connection for the purposes of positioning-related procedures, which is described in below.

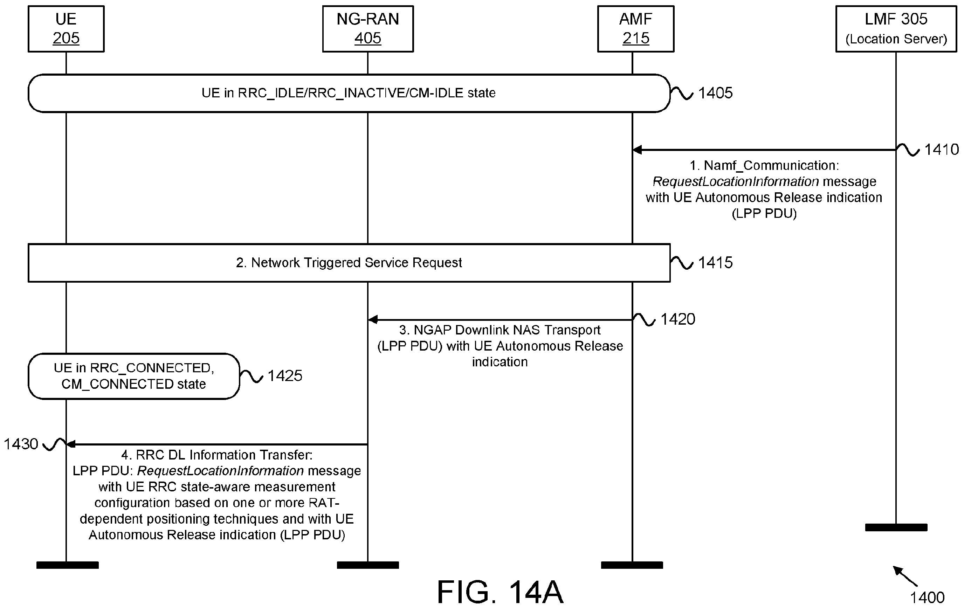

Figures 14A-14B depict an exemplary signaling chart of a UE RRC Autonomous release indication procedure 1400 after transmission of a positioning measurement report positioning-related procedure, according to embodiments of the second solution. Here, a UE autonomous release indication (beneficial for performing energy efficient positioning) may be signaled after the UE 205 has transmitted a measurement report corresponding to measurements performed when in RRC_CONNECTED state and expecting no further measurement for a predefined period. The procedure 1400 involves the UE 205, the NG-RAN 405, the AMF 215, and the LMF 305.

Starting on Figure 14A, as a precondition, the UE 205 is assumed to be outside the RRC connected state, e.g., in the RRC_IDLE state, the RRC_INACTIVE state, and/or the CM-IDLE state (see block 1405). At Step 1, the LMF 305 sends a location information request message to the AMF 215 (see messaging 1410) which, at Step 2, initiates a network-triggered service request (see block 1415). At Step 3, the AMF 215 sends a DL NAS message to the NG-RAN 405 which contains a LPP PDU with an RRC-state-aware, RAT-dependent positioning report configuration (see messaging 1420). At Step 4, the UE 205 receives the LPP PDU measurement configuration via a DL Information Transfer message, which may contain a super set RRC state aware configuration as described above (see messaging 1430). Note that the UE transitions from the RRC IDLE or RRC INACTIVE state to the RRC_CONNECTED state to receive the DL Information Transfer message (see block 1425).

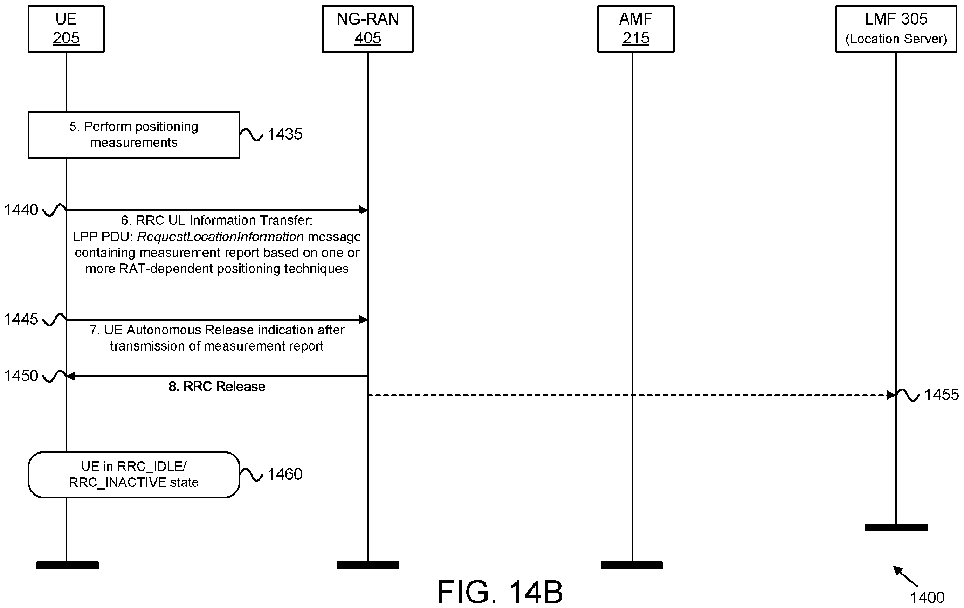

Continuing on Figure 14B, at Step 5, the UE 205 performs the RAT-dependent positioning measurements while in the RRC_CONNECTED state according to the receives measurement configuration (see block 1435). At Step 6, the UE 205 sends a UL Information Transfer message with a UE RRC-state-aware measurement report based on one or more RAT-dependent positioning techniques, according to the received measurement configuration (see messaging 1440). While not depicted in Figure 14B, the NG-RAN 405 forwards the measurement report to the LMF 305. At Step 7, the UE 205 sends a UE autonomous release indication after transmitting the measurement report (see messaging 1445).

An implementation of Step 7 may be signaling the UE autonomous release indication using MAC CE signaling using the existing AS Release Assistance Indication field within the Downlink Channel Quality Report and AS RAI MAC Control Element to inform the network to release the UE after the transmission of the measurement report. In another exemplary implementation, the location server may configure a timer, e.g., *PositioningInactivityTimer* based on the elapsed time from the last transmitted positioning measurement report.

At Step 8, the NG-RAN 405 sends an RRC Release message to the UE 205 and the UE 205 transitions to the RRC_IDLE or RRC_INACTIVE state (see messaging 1450). Because the UE autonomous release requires coordination between the NG-RAN and the LMF 305, the NG-RAN 405 may inform the LMF 1455 of that UE Autonomous release was triggered (see messaging 1455). Note that the UE 205 transitions away from the RRC_CONNECTED state (i.e., into the RRC_IDLE or RRC INACTIVE states) in response to receiving the RRC Release message (see block 1460).

In this solution, a cell access restriction criterion is introduced for UEs performing positioning measurements while in RRC_IDLE/RRC_INACTIVE state and performing cell reselection.

The proposed criterion includes a network configured restriction for cell(s) that the UE may reselect and may be based on the one or more of the following condition(s):
- The candidate cell(s) for reselection may not have a termination to an AMF that can forward the UE's positioning measurement report to the serving LMF, which was previously based on a measurement configuration received during the previous RRC_CONNECTED state. As a result, in the event that the UE transitions to the RRC_CONNECTED state, the UE will be unable to report the positioning measurements to the previous serving LMF.
- The candidate cell(s) for reselection may not support an NRPPa interface and connection to an LMF.

The candidate cell identified for re-selection as the highest ranked cell based on the cell reselection criteria (e.g., as described in 3GPP TS 38.304, Sec 5.2.4.5) shall additionally validate the status of the cell according to following existing fields in the MIB and SIB 1 messages (e.g., as described in 3GPP TS 38.304, Sec 5.3.1):
- *cellBarred* (IE type: "barred" or "not barred")
   ∘ Indicated in MIB message. In case of multiple PLMNs or NPNs indicated in SIB 1, this field is common for all PLMNs and NPNs
- *cellReservedForOperatorUse* (IE type: "reserved" or "not reserved")
   ∘ Indicated in SIB 1 message. In case of multiple PLMNs or NPNs indicated in SIB 1, this field is specified per PLMN or per SNPN.
- *cellReservedForOtherUse* (IE type: "true")
   ∘ Indicated in SIB1 message. In case of multiple PLMNs indicated in SIB1, this field is common for all PLMNs.
- *cellReservedForFutureUse* (IE type: "true")
   ∘ Indicated in SIB 1 message. In case of multiple PLMNs or NPNs indicated in SIB 1, this field is common for all PLMNs and NPNs.

The cells that follow the previously mentioned conditions may utilize the aforementioned status messages or alternatively an exemplary new status message within the MIB/SIB1 can be defined:
- *cellBarredForPositioning* (IE type: "barred" or "not barred")
   ∘ Indicated in SIB 1 message. In the case that the cell does not support the positioning architecture with a suitable connection to an LMF.

Alternatively, a positioning support indication within SIB1 can be defined:
- *positioningSupport* (value "true")
   ∘ Indicated in SIB 1 message. The field is present in the case that the cell supports the positioning architecture with a suitable connection to an LMF.

According to embodiments of the fourth solution, a signaling mechanism is used to provide an indication to the LMF regarding a reduced power mode while operating in the RRC_CONNECTED state. This signaling mechanism enables the LMF 305 to consider the power requirements of the UE 205 when requesting location information from the UE. In one embodiment, the LMF 305 supports the UE reduced power mode by requesting less PRS resources to be measured, if possible, e.g., by configuring less PRS resources per resource set or configuring less TRPs to be measured. In another embodiment, the LMF 305 supports the UE reduced power mode by switching to a positioning technique, if possible, which is less power intensive for the UE 205.

The reduced power mode indication can be transmitted to the LMF 305. In some embodiments, the UE 205 may feedback its battery level to the LMF 305, e.g., as a one-shot indication or as a periodical indication (if required). Note that this feedback may be triggered upon the battery level falling below a preconfigured threshold, e.g., if the battery is less than or equal to 50% or 30%.

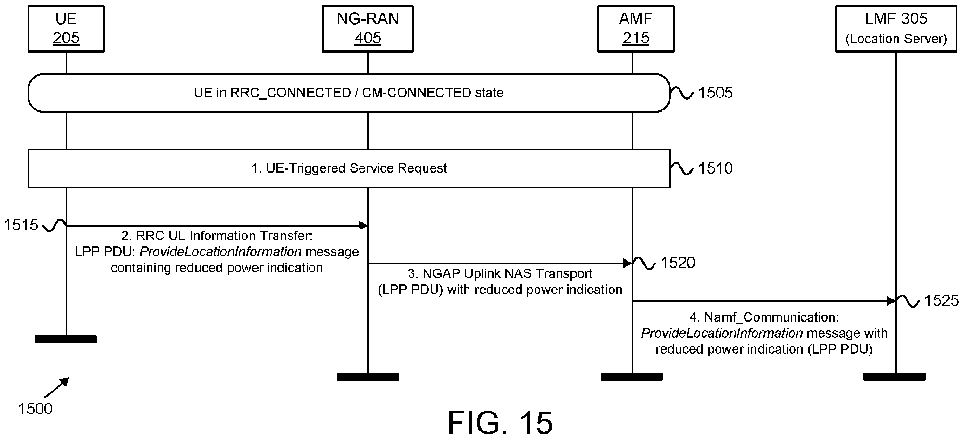

The advantage of the proposed mechanism is that the UE 205 and LMF 305 can maintain a more energy efficient point-to-point LPP session. This form of UE assistance information can enable the UE 205 to feedback its preferred configuration to the LMF 305 to achieve the required power savings. An exemplary signaling procedure of this UE power saving indication is shown in Figure 15.

Figure 15 depicts a procedure 1500 for NAS-based UE power saving indication for positioning, according to embodiments of the fourth solution. The UE 205 may trigger a new request or utilize an existing LPP session to provide this indication depending on its power requirements. The procedure 1500 involves the UE 205, the NG-RAN 405, the AMF 215 and the LMF 305.

As a precondition, the UE 205 is assumed to be in the RRC _CONNECTED and CM-CONNECTED states (see block 1505). At Step 1, the UE 205 initiates a UE-triggered Service Request (see block 1510). At Step 2, the UE 205 sends an RRC UL Information Transfer message with a LPP PDU including a *ProvideLocationInformation* message that contains a reduced power indicator (i.e., UE power saving indication) (see messaging 1515). At Step 3, the NG-RAN 405 sends a UL NAS message (e.g., NGAP Downlink NAS Transport message) to the AMF 215 which contains the LPP PDU with the reduced power indicator (see messaging 1520). At Step 9, the AMF 215 sends a location information message (e.g., Namf_Communication message) to the LMF 305 containing the LPP PDU with the reduced power indicator (see messaging 1525).

Currently, the positioning system information including RAT-dependent positioning system information can be broadcasted for reception by a group of UEs within a RAN-level system information area.

The UE may also acquire faster positioning system information updates while in RRC_IDLE/RRC_INACTIVE state using a paging DCI received from the base station (eNB/gNB). To enable this, the gNB directly informs the UE using the Paging DCI if there is an update available for the Positioning SIB(s). Also, the gNB can indicate if the current scheduling for such a SIB remains valid or if the same has also been modified. In the former case, the UE just goes on to acquire the new Paging System information directly based on stored scheduling information; otherwise, the UE needs to acquire SIB 1 first.

An exemplary form of the update signaling mechanism may include an additional indication (1 bit) within the short message field (highlighted in red) contained in DCI Format 1_0 scrambled by a P-RNTI. Table 6 lists DCI Format 1_0 with CRC scrambled by P-RNTI. Table 7 lists Additional posSIB update indication in Short Message field based on Table 6.

**Table 6: DCI Format 1_0 with CRC scrambled by P-RNTI**

| **DCI Format 1_0 (P-RNTI) Field** | **Number of Bits** |
|---|---|
| Short Message Indicator | 2 |
| Short Message | 8 |
| Frequency domain resource assignment | Variable |
| Time domain resource assignment | 4 |
| VRB-to-PRB mapping | 1 |
| Modulation and coding scheme | 5 |
| TB Scaling | 2 |
| Reserved | |

**Table 7: Additional posSIB update indication in Short Message field based on Table**

| **Bit** | **Short Message** |
|---|---|
| 1 | ***systemInfoModification*** |
| | If set to 1: indication of a BCCH modification other than SIB6, SIB7 and SIB8. |
| 2 | ***etwsAndCmasIndication*** |
| | If set to 1: indication of an ETWS primary notification and/or an ETWS secondary notification and/or a CMAS notification. |
| 3 | ***stopPagingMonitoring*** |
| | If set to 1: stop monitoring PDCCH occasions(s) for paging in this PO. |
| 4 | ***posSIBUpdateAvailable*** |
| | If set to 1: positioning SIB update is available |
| 5-8 | Not used. |

Regarding RAT-dependent positioning measurements, the different DL measurements including DL PRS-RSRP, DL RSTD and UE Rx-Tx Time Difference required for the supported RAT-dependent positioning techniques. The following measurement configurations are specified:
• 4 Pair of DL RSTD measurements can be performed per pair of cells. Each measurement is performed between a different pair of DL PRS Resources/Resource Sets with a single reference timing.
• 8 DL PRS RSRP measurements can be performed on different DL PRS resources from the same cell.

**Table 8: DL Measurements required for DL-based positioning methods**

| **DL PRS reference signal received power (DL PRS-RSRP)** | |
|---|---|
| **Definition** | DL PRS reference signal received power (DL PRS-RSRP), is defined as the linear average over the power contributions (in [W]) of the resource elements that carry DL PRS reference signals configured for RSRP measurements within the considered measurement frequency bandwidth. |
| | For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
| **Applicable for** | RRC_CONNECTED intra-frequency, |
| | RRC_CONNECTED inter-frequency |
| **DL reference signal time difference (DL RSTD)** | |
| **Definition** | DL reference signal time difference (DL RSTD) is the DL relative timing difference between the positioning node *j* and the reference positioning node *i*, defined as T_{SubframeRxj} - T_{SubframeRxi}, |
| | Where: |
| | T_{SubframeRxj} is the time when the UE receives the start of one subframe from positioning node *j*. |
| | T_{SubframeRxi} is the time when the UE receives the corresponding start of one subframe from positioning node i that is closest in time to the subframe received from positioning node *j*. |
| | Multiple DL PRS resources can be used to determine the start of one subframe from a positioning node. |
| | For frequency range 1, the reference point for the DL RSTD shall be the antenna connector of the UE. For frequency range 2, the reference point for the DL RSTD shall be the antenna of the UE. |
| **Applicable for** | RRC_CONNECTED intra-frequency |
| | RRC_CONNECTED inter-frequency |

| **UE Rx - Tx time difference** | |
|---|---|
| **Definition** | The UE Rx - Tx time difference is defined as T_{UE-RX} - T_{UE-TX} Where: |
| | T_{UE-RX} is the UE received timing of downlink subframe #*i* from a positioning node, defined by the first detected path in time. |
| | T_{UE-TX} is the UE transmit timing of uplink subframe #j that is closest in time to the subframe #i received from the positioning node. |
| | Multiple DL PRS resources can be used to determine the start of one subframe of the first arrival path of the positioning node. |
| | For frequency range 1, the reference point for T_{UE-RX} measurement shall be the Rx antenna connector of the UE and the reference point for T_{UE-TX} measurement shall be the Tx antenna connector of the UE. For frequency range 2, the reference point for T_{UE-RX} measurement shall be the Rx antenna of the UE and the reference point for T_{UE-TX} measurement shall be the Tx antenna of the UE. |
| **Applicable for** | RRC_CONNECTED intra-frequency |
| | RRC_CONNECTED inter-frequency |

Regarding PRS design, for 3GPP Rel-16, a DL PRS Resource ID in a DL PRS Resource set is associated with a single beam transmitted from a single TRP. Note that a TRP may transmit one or more beams. A DL PRS occasion is one instance of periodically repeated time windows (consecutive slot(s)) where DL PRS is expected to be transmitted. With regards to Quasi Co-Location ("QCL") relations beyond Type-D of a DL PRS resource, support one or more of the following QCL options:
- QCL Option 1: QCL-TypeC from a Synchronization Signal Block ("SSB") from a TRP.
- QCL Option 2: QCL-TypeC from a DL PRS resource from a TRP.
- QCL Option 3: QCL-TypeA from a DL PRS resource from TRP.
- QCL Option 4: QCL-TypeC from a Channel State Information Reference Signal ("CSI-RS") resource from a TRP.
- QCL Option 5: QCL-TypeA from a CSI-RS resource from a TRP.
- QCL Option 6: No QCL relation beyond Type-D is supported.

Note that QCL-TypeA refers to Doppler shift, Doppler spread, average delay, delay spread; QCL-TypeB refers to Doppler shift, Doppler spread'; QCL-TypeC refers to Average delay, Doppler shift; and QCL-TypeD refers to Spatial Rx parameter.

For a DL PRS resource, QCL-TypeC from an SSB from a TRP (QCL Option 1) is supported. An ID is defined that can be associated with multiple DL PRS Resource Sets associated with a single TRP. An ID is defined that can be associated with multiple DL PRS Resource Sets associated with a single TRP. This ID can be used along with a DL PRS Resource Set ID and a DL PRS Resources ID to uniquely identify a DL PRS Resource. Each TRP should only be associated with one such ID.

DL PRS Resource IDs are locally defined within DL PRS Resource Set. DL PRS Resource Set IDs are locally defined within TRP. The time duration spanned by one DL PRS Resource set containing repeated DL PRS Resources should not exceed DL-PRS-Periodicity. Parameter *DL-PRS-ResourceRepetitionFactor* is configured for a DL PRS Resource Set and controls how many times each DL-PRS Resource is repeated for a single instance of the DL-PRS Resource Set. Supported values include: 1, 2, 4, 6, 8, 16, 32.

As related to NR positioning, the term "positioning frequency layer" refers to a collection of DL PRS Resource Sets across one or more TRPs which have:
- The same SCS and CP type
- The same center frequency
- The same point-A (already agreed)
- All DL PRS Resources of the DL PRS Resource Set have the same bandwidth
- All DL PRS Resource Sets belonging to the same Positioning Frequency Layer have the same value of DL PRS Bandwidth and Start PRB

Duration of DL PRS symbols in units of ms a UE can process every T ms assuming 272 PRB allocation is a UE capability.

In some embodiments, the terms antenna, panel, and antenna panel are used interchangeably. An antenna panel may be a hardware that is used for transmitting and/or receiving radio signals at frequencies lower than 6GHz, e.g., frequency range 1 (FR1), or higher than 6GHz, e.g., frequency range 2 (FR2) or millimeter wave (mmWave). In some embodiments, an antenna panel may comprise an array of antenna elements, wherein each antenna element is connected to hardware such as a phase shifter that allows a control module to apply spatial parameters for transmission and/or reception of signals. The resulting radiation pattern may be called a beam, which may or may not be unimodal and may allow the device to amplify signals that are transmitted or received from spatial directions.

In some embodiments, an antenna panel may or may not be virtualized as an antenna port in the specifications. An antenna panel may be connected to a baseband processing module through a radio frequency ("RF") chain for each of transmission (egress) and reception (ingress) directions. A capability of a device in terms of the number of antenna panels, their duplexing capabilities, their beamforming capabilities, and so on, may or may not be transparent to other devices. In some embodiments, capability information may be communicated via signaling or, in some embodiments, capability information may be provided to devices without a need for signaling. In the case that such information is available to other devices, it can be used for signaling or local decision making.

In some embodiments, a device (e.g., UE, node) antenna panel may be a physical or logical antenna array comprising a set of antenna elements or antenna ports that share a common or a significant portion of an RF chain (e.g., in-phase/quadrature ("I/Q") modulator, analog to digital ("A/D") converter, local oscillator, phase shift network). The device antenna panel or "device panel" may be a logical entity with physical device antennas mapped to the logical entity. The mapping of physical device antennas to the logical entity may be up to device implementation. Communicating (receiving or transmitting) on at least a subset of antenna elements or antenna ports active for radiating energy (also referred to herein as active elements) of an antenna panel requires biasing or powering on of the RF chain which results in current drain or power consumption in the device associated with the antenna panel (including power amplifier/low noise amplifier ("LNA") power consumption associated with the antenna elements or antenna ports). The phrase "active for radiating energy," as used herein, is not meant to be limited to a transmit function but also encompasses a receive function. Accordingly, an antenna element that is active for radiating energy may be coupled to a transmitter to transmit radio frequency energy or to a receiver to receive radio frequency energy, either simultaneously or sequentially, or may be coupled to a transceiver in general, for performing its intended functionality. Communicating on the active elements of an antenna panel enables generation of radiation patterns or beams.

In some embodiments, depending on device's own implementation, a "device panel" can have at least one of the following functionalities as an operational role of Unit of antenna group to control its Tx beam independently, Unit of antenna group to control its transmission power independently, Unit of antenna group to control its transmission timing independently. The "device panel" may be transparent to the RAN node. For certain condition(s), the RAN node 210 can assume the mapping between device's physical antennas to the logical entity "device panel" may not be changed. For example, the condition may include until the next update or report from device or comprise a duration of time over which the RAN node assumes there will be no change to the mapping.

A Device may report its capability with respect to the "device panel" to the RAN node or network. The device capability may include at least the number of "device panels." In one implementation, the device may support UL transmission from one beam within a panel; with multiple panels, more than one beam (one beam per panel) may be used for UL transmission. In another implementation, more than one beam per panel may be supported/used for UL transmission.

In some of the embodiments described, an antenna port is defined such that the channel over which a symbol on the antenna port is conveyed can be inferred from the channel over which another symbol on the same antenna port is conveyed.

Two antenna ports are said to be quasi co-located if the large-scale properties of the channel over which a symbol on one antenna port is conveyed can be inferred from the channel over which a symbol on the other antenna port is conveyed. The large-scale properties include one or more of delay spread, Doppler spread, Doppler shift, average gain, average delay, and spatial Rx parameters.

Two antenna ports may be quasi-located with respect to a subset of the large-scale properties and different subset of large-scale properties may be indicated by a Quasi-Co-Location ("QCL") Type. For example, the parameter qcl-Type may take one of the following values:
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}.

Spatial Rx parameters may include one or more of: Angle of Arrival ("AoA"), Dominant AoA, average AoA, angular spread, Power Angular Spectrum ("PAS") of AoA, average Angle of Departure ("AoD"), PAS of AoD, transmit/receive channel correlation, transmit/receive beamforming, spatial channel correlation etc.

An "antenna port" according to an embodiment may be a logical port that may correspond to a beam (resulting from beamforming) or may correspond to a physical antenna on a device. In some embodiments, a physical antenna may map directly to a single antenna port, in which an antenna port corresponds to an actual physical antenna. Alternately, a set or subset of physical antennas, or antenna set or antenna array or antenna sub-array, may be mapped to one or more antenna ports after applying complex weights, a cyclic delay, or both to the signal on each physical antenna. The physical antenna set may have antennas from a single module or panel or from multiple modules or panels. The weights may be fixed as in an antenna virtualization scheme, such as cyclic delay diversity ("CDD"). The procedure used to derive antenna ports from physical antennas may be specific to a device implementation and transparent to other devices.

In some of the embodiments described, a TCI-state associated with a target transmission can indicate parameters for configuring a quasi-collocation relationship between the target transmission (e.g., target RS of DM-RS ports of the target transmission during a transmission occasion) and a source reference signal(s) (e.g., SSB/CSI-RS/SRS) with respect to QCL type parameter(s) indicated in the corresponding TCI state. A device can receive a configuration of a plurality of transmission configuration indicator states for a serving cell for transmissions on the serving cell.

In some of the embodiments described, a spatial relation information associated with a target transmission can indicate parameters for configuring a spatial setting between the target transmission and a reference RS (e.g., SSB/CSI-RS/SRS). For example, the device may transmit the target transmission with the same spatial domain filter/beam used for reception the reference RS (e.g., DL RS such as SSB/CSI-RS). In another example, the device may transmit the target transmission with the same spatial domain transmission filter/beam used for the transmission of the reference RS (e.g., UL RS such as SRS). A device can receive a configuration of a plurality of spatial relation information configurations for a serving cell for transmissions on the serving cell.

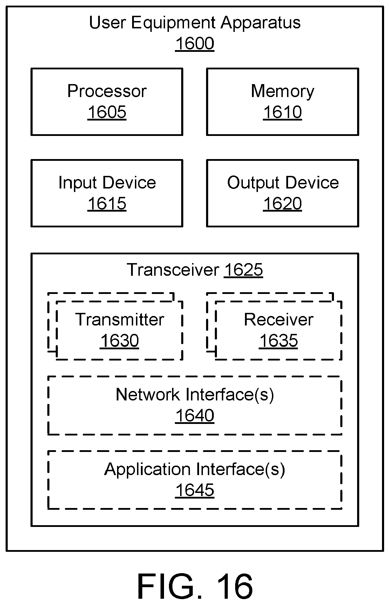

Figure 16 depicts a user equipment apparatus 1600 that may be used for performing energy efficient positioning, according to embodiments of the disclosure. In various embodiments, the user equipment apparatus 1600 is used to implement one or more of the solutions described above. The user equipment apparatus 1600 may be one embodiment of the remote unit 105 and/or the UE 205, described above. Furthermore, the user equipment apparatus 1600 may include a processor 1605, a memory 1610, an input device 1615, an output device 1620, and a transceiver 1625.

In some embodiments, the input device 1615 and the output device 1620 are combined into a single device, such as a touchscreen. In certain embodiments, the user equipment apparatus 1600 may not include any input device 1615 and/or output device 1620. In various embodiments, the user equipment apparatus 1600 may include one or more of: the processor 1605, the memory 1610, and the transceiver 1625, and may not include the input device 1615 and/or the output device 1620.

As depicted, the transceiver 1625 includes at least one transmitter 1630 and at least one receiver 1635. In some embodiments, the transceiver 1625 communicates with one or more cells (or wireless coverage areas) supported by one or more base units 121. In various embodiments, the transceiver 1625 is operable on unlicensed spectrum. Moreover, the transceiver 1625 may include multiple UE panels supporting one or more beams. Additionally, the transceiver 1625 may support at least one network interface 1640 and/or application interface 1645. The application interface(s) 1645 may support one or more APIs. The network interface(s) 1640 may support 3GPP reference points, such as Uu, N1, PC5, etc. Other network interfaces 1640 may be supported, as understood by one of ordinary skill in the art.

The processor 1605, in one embodiment, may include any known controller capable of executing computer-readable instructions and/or capable of performing logical operations. For example, the processor 1605 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 1605 executes instructions stored in the memory 1610 to perform the methods and routines described herein. The processor 1605 is communicatively coupled to the memory 1610, the input device 1615, the output device 1620, and the transceiver 1625.

In various embodiments, the processor 1605 controls the user equipment apparatus 1600 to implement the above described UE behaviors. In certain embodiments, the processor 1605 may include an application processor (also known as "main processor") which manages application-domain and operating system ("OS") functions and a baseband processor (also known as "baseband radio processor") which manages radio functions.

In various embodiments, the transceiver 1625 receives a location information request message contains a measurement configuration and a UE autonomous release indication. The processor 1605 performs performing positioning measurement according to the measurement configuration and transmitting a positioning report to an LMF. The processor 1605 additionally transmits a UE Autonomous Release signal to a RAN node in response to transmitting the positioning report.

In some embodiments, transmitting the positioning report includes initiating an LPP session with the LMF, where the UE Autonomous Release signal is transmitted in response to completing the LPP session. In certain embodiments, the positioning report is one of a triggered positioning measurement report and a periodic positioning measurement report.

In some embodiments, the processor 1605 receives an inactivity timer from the LMF, the inactivity timer tracking an elapsed time from a last transmitted positioning measurement report. In such embodiments, transmitting the UE Autonomous Release signal occurs in response to expiry of the inactivity timer (e.g., when the timer reaches a configured threshold).

In some embodiments, the measurement configuration includes an RRC-state-aware measurement configuration based on at least one RAT-dependent positioning technique. In certain embodiments, the RRC-state-aware measurement configuration may include a first configuration for devices in an RRC connected state and a second configuration for devices not in the RRC connected state. In one embodiment, the second configuration includes a first sub-configuration for devices in an RRC idle state and a second sub-configuration for devices in an RRC inactive state. In certain embodiments, the RRC-state-aware measurement configuration includes at least one of: a DL PRS-RSRP measurement configuration, a DL RSTD measurement configuration, and a UE Rx-Tx time difference measurement configuration to be measured in an RRC connected state or in an RRC non-connected state (e.g., RRC_IDLE state or RRC_INACTIVE state), depending on the RAT-dependent positioning technique.

In some embodiments, the transceiver 1625 receives system information from a first cell, where the system information contains a positioning support indicator that indicates whether the first cell supports a connection to the LMF. In such embodiments, the processor 1605 performs cell reselection, where the first cell is excluded from cell reselection consideration when the positioning support indicator indicates that the first cell does not support a connection to the LMF.

In certain embodiments, receiving the system information includes receiving the system information block SIB1, where the SIB1 contains the positioning support indicator. In certain embodiments, the first cell is indicated as supporting a connection to the LMF when the first cell has an AMF termination that can forward positioning data to the LMF. In certain embodiments, the first cell is indicated as supporting a connection to the LMF when the first cell has an NR Positioning Protocol Annex ("NRPPa") interface for communicating with the LMF.

In some embodiments, the processor 1605 further provides an indication to the LMF for operating in a reduced power mode while in an RRC connected state (e.g., the RRC_CONNECTED state). In such embodiments, the processor 1605 receives a configuration for energy efficient positioning measurements. In one embodiment, the indication provided to the LMF contains a battery level. In certain embodiments, the configuration for energy efficient positioning measurements includes a configuration for reduced power positioning technique. In certain embodiments, the configuration for energy efficient positioning measurements includes a configuration for measuring fewer PRS resources per resource set or configuring fewer TRPs to be measured.

In some embodiments, the processor 1605 requests a Positioning System Information Block ("PosSIB") from a first cell and receives paging DCI from the first cell, where the paging DCI contains an indication that an updated PosSIB is available. In such embodiments, the processor 1605 retrieves the updated PosSIB in response to the paging DCI. In certain embodiments, the PosSIB contains a first measurement configuration applicable to an RRC connected state and a second measurement configuration applicable to an RRC non-connected state (e.g., RRC INACTIVE state or RRC_IDLE state).

The memory 1610, in one embodiment, is a computer readable storage medium. In some embodiments, the memory 1610 includes volatile computer storage media. For example, the memory 1610 may include a RAM, including dynamic RAM ("DRAM"), synchronous dynamic RAM ("SDRAM"), and/or static RAM ("SRAM"). In some embodiments, the memory 1610 includes non-volatile computer storage media. For example, the memory 1610 may include a hard disk drive, a flash memory, or any other suitable non-volatile computer storage device. In some embodiments, the memory 1610 includes both volatile and non-volatile computer storage media.

In some embodiments, the memory 1610 stores data related to performing energy efficient positioning. For example, the memory 1610 may store various parameters, panel/beam configurations, resource assignments, policies, and the like as described above. In certain embodiments, the memory 1610 also stores program code and related data, such as an operating system or other controller algorithms operating on the apparatus 1600.

The input device 1615, in one embodiment, may include any known computer input device including a touch panel, a button, a keyboard, a stylus, a microphone, or the like. In some embodiments, the input device 1615 may be integrated with the output device 1620, for example, as a touchscreen or similar touch-sensitive display. In some embodiments, the input device 1615 includes a touchscreen such that text may be input using a virtual keyboard displayed on the touchscreen and/or by handwriting on the touchscreen. In some embodiments, the input device 1615 includes two or more different devices, such as a keyboard and a touch panel.

The output device 1620, in one embodiment, is designed to output visual, audible, and/or haptic signals. In some embodiments, the output device 1620 includes an electronically controllable display or display device capable of outputting visual data to a user. For example, the output device 1620 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 1620 may include a wearable display separate from, but communicatively coupled to, the rest of the user equipment apparatus 1600, such as a smart watch, smart glasses, a heads-up display, or the like. Further, the output device 1620 may be a component of a smart phone, a personal digital assistant, a television, a table computer, a notebook (laptop) computer, a personal computer, a vehicle dashboard, or the like.

In certain embodiments, the output device 1620 includes one or more speakers for producing sound. For example, the output device 1620 may produce an audible alert or notification (e.g., a beep or chime). In some embodiments, the output device 1620 includes one or more haptic devices for producing vibrations, motion, or other haptic feedback. In some embodiments, all or portions of the output device 1620 may be integrated with the input device 1615. For example, the input device 1615 and output device 1620 may form a touchscreen or similar touch-sensitive display. In other embodiments, the output device 1620 may be located near the input device 1615.

The transceiver 1625 communicates with one or more network functions of a mobile communication network via one or more access networks. The transceiver 1625 operates under the control of the processor 1605 to transmit messages, data, and other signals and also to receive messages, data, and other signals. For example, the processor 1605 may selectively activate the transceiver 1625 (or portions thereof) at particular times in order to send and receive messages.

The transceiver 1625 includes at least transmitter 1630 and at least one receiver 1635. One or more transmitters 1630 may be used to provide UL communication signals to a base unit 121, such as the UL transmissions described herein. Similarly, one or more receivers 1635 may be used to receive DL communication signals from the base unit 121, as described herein. Although only one transmitter 1630 and one receiver 1635 are illustrated, the user equipment apparatus 1600 may have any suitable number of transmitters 1630 and receivers 1635. Further, the transmitter(s) 1630 and the receiver(s) 1635 may be any suitable type of transmitters and receivers. In one embodiment, the transceiver 1625 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 1625, transmitters 1630, and receivers 1635 may be implemented as physically separate components that access a shared hardware resource and/or software resource, such as for example, the network interface 1640.

In various embodiments, one or more transmitters 1630 and/or one or more receivers 1635 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 1630 and/or one or more receivers 1635 may be implemented and/or integrated into a multi-chip module. In some embodiments, other components such as the network interface 1640 or other hardware components/circuits may be integrated with any number of transmitters 1630 and/or receivers 1635 into a single chip. In such embodiment, the transmitters 1630 and receivers 1635 may be logically configured as a transceiver 1625 that uses one more common control signals or as modular transmitters 1630 and receivers 1635 implemented in the same hardware chip or in a multi-chip module.

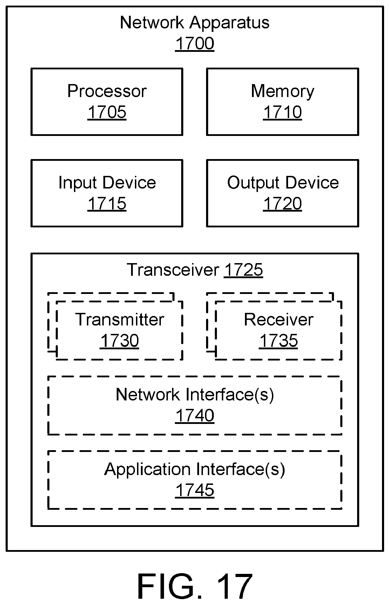

Figure 17 depicts a network apparatus 1700 that may be used for performing energy efficient positioning, according to embodiments of the disclosure. In one embodiment, network apparatus 1700 may be one implementation of a RAN node, such as the base unit 121 and/or the RAN node 210, as described above. Furthermore, the base network apparatus 1700 may include a processor 1705, a memory 1710, an input device 1715, an output device 1720, and a transceiver 1725.

In some embodiments, the input device 1715 and the output device 1720 are combined into a single device, such as a touchscreen. In certain embodiments, the network apparatus 1700 may not include any input device 1715 and/or output device 1720. In various embodiments, the network apparatus 1700 may include one or more of: the processor 1705, the memory 1710, and the transceiver 1725, and may not include the input device 1715 and/or the output device 1720.

As depicted, the transceiver 1725 includes at least one transmitter 1730 and at least one receiver 1735. Here, the transceiver 1725 communicates with one or more remote units 175. Additionally, the transceiver 1725 may support at least one network interface 1740 and/or application interface 1745. The application interface(s) 1745 may support one or more APIs. The network interface(s) 1740 may support 3GPP reference points, such as Uu, N1, N2 and N3. Other network interfaces 1740 may be supported, as understood by one of ordinary skill in the art.

The processor 1705, in one embodiment, may include any known controller capable of executing computer-readable instructions and/or capable of performing logical operations. For example, the processor 1705 may be a microcontroller, a microprocessor, a CPU, a GPU, an auxiliary processing unit, a FPGA, or similar programmable controller. In some embodiments, the processor 1705 executes instructions stored in the memory 1710 to perform the methods and routines described herein. The processor 1705 is communicatively coupled to the memory 1710, the input device 1715, the output device 1720, and the transceiver 1725.

In various embodiments, the network apparatus 1700 is a RAN node (e.g., gNB) that communicates with one or more UEs, as described herein. In such embodiments, the processor 1705 controls the network apparatus 1700 to perform the above described RAN behaviors. When operating as a RAN node, the processor 1705 may include an application processor (also known as "main processor") which manages application-domain and operating system ("OS") functions and a baseband processor (also known as "baseband radio processor") which manages radio functions.

In various embodiments, the processor 1705 controls the network apparatus 1700 to perform the above described LMF behaviors. For example, the processor 1705 may control the network interface 1740 to establish a LPP session with a UE. In response to the network interface 1740 receiving an indication from the UE for operating in a reduced power mode, the processor 1705 configures the UE for energy efficient positioning measurements.

In some embodiments, the indication provided to the LMF contains a battery level indication for the UE. In some embodiments, the configuration for energy efficient positioning measurements includes a configuration for reduced power positioning technique. In some embodiments, the configuration for energy efficient positioning measurements includes a configuration for measuring fewer PRS resources per resource set or configuring fewer TRPs to be measured.

In some embodiments, the processor 1705 sends a location information request message to a UE, the request message containing a measurement configuration and UE autonomous release indication and receives a positioning report from the UE via the LPP session. In such embodiments, the processor 1705 receives a UE Autonomous Release signal from the UE, where the UE transmits the UE Autonomous Release signal in response to sending the positioning report and terminates the LPP session in response to the UE Autonomous Release signal.

In certain embodiments, the processor 1705 configures the UE with an inactivity timer for tracking an elapsed time from a last transmitted positioning measurement report. In such embodiments, the UE transmits the UE Autonomous Release response signal in response to expiry of the inactivity timer (e.g., where the timer reaches a configured threshold). Note that the UE Autonomous Release response signal informs the network (i.e., RAN node and LMF) that the UE has been released. In certain embodiments, the UE Autonomous Release response signal is transmitted based on the serving RAN node validation via RAN and LMF coordination. Because UE Autonomous Release requires coordination between the RAN node (e.g., gNB) and the LMF, here the RAN node approves *a priori* that the UE can be autonomously released.

In some embodiments, the location information request message includes an RRC-state-aware measurement configuration based on at least one RAT-dependent positioning technique. In certain embodiments, the RRC-state-aware measurement configuration includes a first configuration for devices in an RRC connected state and a second configuration for devices not in the RRC connected state. In one embodiment, the second configuration includes a first sub-configuration for devices in an RRC idle state and a second sub-configuration for devices in an RRC inactive state. In certain embodiments, the RRC-state-aware measurement configuration includes at least one of: a DL PRS-RSRP measurement configuration, a DL RSTD measurement configuration, and a UE Rx-Tx time difference measurement configuration to be measured in an RRC connected state or in an RRC non-connected state (e.g., RRC_IDLE state or RRC_INACTIVE state), depending on the RAT-dependent positioning technique.

In some embodiments, the LMF requests a network entity to provide the state-transition notification of the UE between an RRC connected (e.g., RRC_CONNECTED state) state and an RRC non-connected state (e.g., RRC_IDLE state or RRC_INACTIVE state). In such embodiments, the LMF receives a state-transition notification response message from the UE indicating that the UE is in any of the following states: (i) RRC_CONNECTED, (ii) RRC_INACTIVE, (iii) RRC_IDLE.

In certain embodiments, the network entity is one of: an AMF and a RAN node (e.g., gNB). In certain embodiments, the state-transition notification is based on at least one of: a subscription request and an on-demand request. Where the state-transition notification is subscription-based, the processor 1705 may further cancel the state-transition notification by the LMF.

The memory 1710, in one embodiment, is a computer readable storage medium. In some embodiments, the memory 1710 includes volatile computer storage media. For example, the memory 1710 may include a RAM, including dynamic RAM ("DRAM"), synchronous dynamic RAM ("SDRAM"), and/or static RAM ("SRAM"). In some embodiments, the memory 1710 includes non-volatile computer storage media. For example, the memory 1710 may include a hard disk drive, a flash memory, or any other suitable non-volatile computer storage device. In some embodiments, the memory 1710 includes both volatile and non-volatile computer storage media.

In some embodiments, the memory 1710 stores data related to performing energy efficient positioning. For example, the memory 1710 may store parameters, configurations, resource assignments, policies, and the like, as described above. In certain embodiments, the memory 1710 also stores program code and related data, such as an operating system or other controller algorithms operating on the apparatus 1700.

The input device 1715, in one embodiment, may include any known computer input device including a touch panel, a button, a keyboard, a stylus, a microphone, or the like. In some embodiments, the input device 1715 may be integrated with the output device 1720, for example, as a touchscreen or similar touch-sensitive display. In some embodiments, the input device 1715 includes a touchscreen such that text may be input using a virtual keyboard displayed on the touchscreen and/or by handwriting on the touchscreen. In some embodiments, the input device 1715 includes two or more different devices, such as a keyboard and a touch panel.

The output device 1720, in one embodiment, is designed to output visual, audible, and/or haptic signals. In some embodiments, the output device 1720 includes an electronically controllable display or display device capable of outputting visual data to a user. For example, the output device 1720 may include, but is not limited to, an LCD display, an LED display, an OLED display, a projector, or similar display device capable of outputting images, text, or the like to a user. As another, non-limiting, example, the output device 1720 may include a wearable display separate from, but communicatively coupled to, the rest of the network apparatus 1700, such as a smart watch, smart glasses, a heads-up display, or the like. Further, the output device 1720 may be a component of a smart phone, a personal digital assistant, a television, a table computer, a notebook (laptop) computer, a personal computer, a vehicle dashboard, or the like.

In certain embodiments, the output device 1720 includes one or more speakers for producing sound. For example, the output device 1720 may produce an audible alert or notification (e.g., a beep or chime). In some embodiments, the output device 1720 includes one or more haptic devices for producing vibrations, motion, or other haptic feedback. In some embodiments, all or portions of the output device 1720 may be integrated with the input device 1715. For example, the input device 1715 and output device 1720 may form a touchscreen or similar touch-sensitive display. In other embodiments, the output device 1720 may be located near the input device 1715.

The transceiver 1725 includes at least transmitter 1730 and at least one receiver 1735. One or more transmitters 1730 may be used to communicate with the UE, as described herein. Similarly, one or more receivers 1735 may be used to communicate with network functions in the PLMN and/or RAN, as described herein. Although only one transmitter 1730 and one receiver 1735 are illustrated, the network apparatus 1700 may have any suitable number of transmitters 1730 and receivers 1735. Further, the transmitter(s) 1730 and the receiver(s) 1735 may be any suitable type of transmitters and receivers.

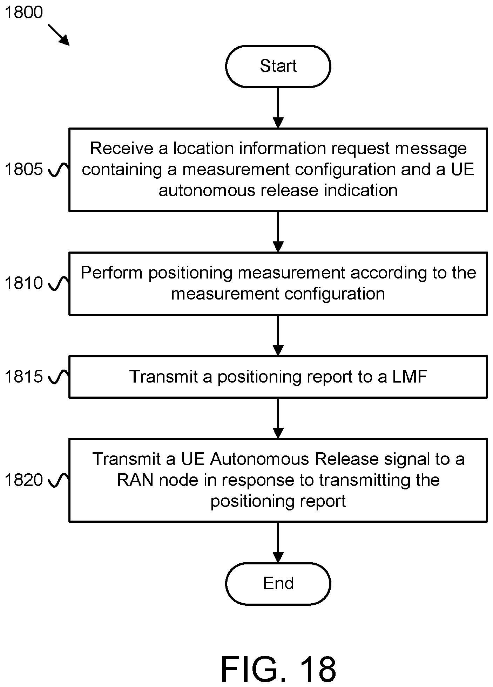

Figure 18 depicts one embodiment of a method 1800 for performing energy efficient positioning, according to embodiments of the disclosure. In various embodiments, the method 1800 is performed by a user equipment device in a mobile communication network, such as the remote unit 105, the UE 205, and/or the user equipment apparatus 1600, described above. In some embodiments, the method 1800 is performed by a processor, such as a microcontroller, a microprocessor, a CPU, a GPU, an auxiliary processing unit, a FPGA, or the like.

The method 1800 begins and receives 1805 a location information request message containing a measurement configuration and a UE autonomous release indication. The method 1800 includes performing 1810 positioning measurement according to the measurement configuration. The method 1800 includes transmitting 1815 a positioning report to an LMF. The method 1800 includes transmitting 1820 a UE Autonomous Release signal to a RAN node in response to transmitting the positioning report. The method 1800 ends.

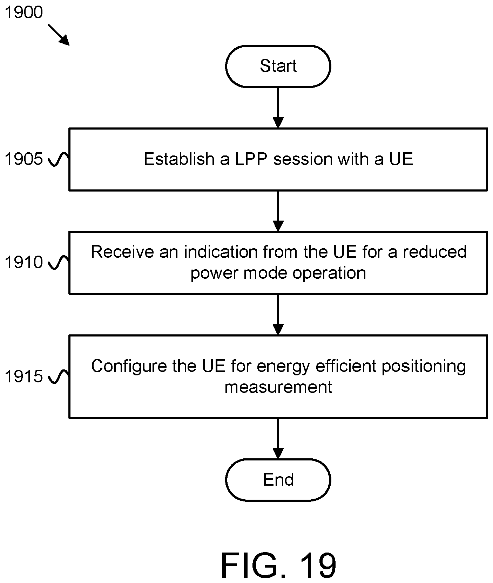

Figure 19 depicts one embodiment of a method 1900 for performing energy efficient positioning, according to embodiments of the disclosure. In various embodiments, the method 1900 is performed by a Location Management Function in a mobile communication network, such as the LMF 147, the LMF 305, and/or the network apparatus 1700, described above. In some embodiments, the method 1900 is performed by a processor, such as a microcontroller, a microprocessor, a CPU, a GPU, an auxiliary processing unit, a FPGA, or the like.

The method 1900 begins and establishes 1905 an LTE Protocol Positioning ("LPP") session with a UE. The method 1900 includes receiving 1910 an indication from the UE for a reduced power mode operation. The method 1900 includes configuring 1915 the UE for energy efficient positioning measurement. The method 1900 ends.

Disclosed herein is a first apparatus for performing energy efficient positioning, according to embodiments of the disclosure. The first apparatus may be implemented by a user equipment device in a mobile communication network, such as the remote unit 105, the UE 205, and/or the user equipment apparatus 1600, described above. The first apparatus includes a processor and a transceiver that receives a location information request message contains a measurement configuration and a UE autonomous release indication. The processor performs performing positioning measurement according to the measurement configuration and transmitting a positioning report to an LMF. The processor additionally transmits a UE Autonomous Release signal to a RAN node in response to transmitting the positioning report.

In some embodiments, transmitting the positioning report includes initiating an LPP session with the LMF, where the UE Autonomous Release signal is transmitted in response to completing the LPP session. In certain embodiments, the positioning report is one of a triggered positioning measurement report and a periodic positioning measurement report.

In some embodiments, the processor receives an inactivity timer from the LMF, the inactivity timer tracking an elapsed time from a last transmitted positioning measurement report. In such embodiments, transmitting the UE Autonomous Release signal occurs in response to expiry of the inactivity timer (e.g., when the timer reaches a configured threshold).

In some embodiments, the measurement configuration includes an RRC-state-aware measurement configuration based on at least one RAT-dependent positioning technique. In certain embodiments, the RRC-state-aware measurement configuration may include a first configuration for devices in an RRC connected state and a second configuration for devices not in the RRC connected state. In one embodiment, the second configuration includes a first sub-configuration for devices in an RRC idle state and a second sub-configuration for devices in an RRC inactive state. In certain embodiments, the RRC-state-aware measurement configuration includes at least one of: a DL PRS-RSRP measurement configuration, a DL RSTD measurement configuration, and a UE Rx-Tx time difference measurement configuration to be measured in an RRC connected state or in an RRC non-connected state (e.g., RRC_IDLE state or RRC_INACTIVE state), depending on the RAT-dependent positioning technique.

In some embodiments, the transceiver receives system information from a first cell, where the system information contains a positioning support indicator that indicates whether the first cell supports a connection to the LMF. In such embodiments, the processor performs cell reselection, where the first cell is excluded from cell reselection consideration when the positioning support indicator indicates that the first cell does not support a connection to the LMF.

In certain embodiments, receiving the system information includes receiving the system information block SIB1, where the SIB1 contains the positioning support indicator. In certain embodiments, the first cell is indicated as supporting a connection to the LMF when the first cell has an AMF termination that can forward positioning data to the LMF. In certain embodiments, the first cell is indicated as supporting a connection to the LMF when the first cell has an NRPPa interface for communicating with the LMF.

In some embodiments, the processor further provides an indication to the LMF for operating in a reduced power mode while in an RRC connected state (e.g., the RRC_CONNECTED state). In such embodiments, the processor receives a configuration for energy efficient positioning measurements. In one embodiment, the indication provided to the LMF contains a battery level. In certain embodiments, the configuration for energy efficient positioning measurements includes a configuration for reduced power positioning technique. In certain embodiments, the configuration for energy efficient positioning measurements includes a configuration for measuring fewer PRS resources per resource set or configuring fewer TRPs to be measured.

In some embodiments, the processor requests a Positioning System Information Block ("PosSIB") from a first cell and receives paging DCI from the first cell, where the paging DCI contains an indication that an updated PosSIB is available. In such embodiments, the processor retrieves the updated PosSIB in response to the paging DCI. In certain embodiments, the PosSIB contains a first measurement configuration applicable to an RRC connected state and a second measurement configuration applicable to an RRC non-connected state (e.g., RRC INACTIVE state or RRC IDLE state).

Disclosed herein is a first method for performing energy efficient positioning, according to embodiments of the disclosure. The first method may be performed by a user equipment device in a mobile communication network, such as the remote unit 105, the UE 205, and/or the user equipment apparatus 1600, described above. The first method includes receiving a location information request message, where the request message contains a measurement configuration and a UE autonomous release indication. The first method includes performing positioning measurements according to the measurement configuration and transmitting a positioning report to an LMF. The first method includes transmitting a UE Autonomous Release signal to the RAN node in response to transmitting the positioning report.

In some embodiments, transmitting the positioning report comprises initiating a LPP session with the LMF, where the UE Autonomous Release signal is transmitted in response to completing the LPP session. In certain embodiments, the positioning report is one of a triggered positioning measurement report and a periodic positioning measurement report.

In some embodiments, the first method includes receiving an inactivity timer from the LMF, the inactivity timer tracking an elapsed time from a last transmitted positioning measurement report. In such embodiments, the UE Autonomous Release signal is transmitted in response to expiry of the inactivity timer.

In some embodiments, the measurement configuration comprises an RRC-state-aware measurement configuration based on at least one RAT-dependent positioning technique.

In certain embodiments, the RRC-state-aware measurement configuration includes a first configuration for devices in an RRC connected state and a second configuration for devices not in the RRC connected state. In one embodiment, the second configuration includes a first sub-configuration for devices in an RRC idle state and a second sub-configuration for devices in an RRC inactive state. In certain embodiments, the RRC-state-aware measurement configuration comprises at least one of: a DL PRS-RSRP measurement configuration, a DL RSTD measurement configuration, and a UE Rx-Tx time difference measurement configuration to be measured in an RRC connected state or in an RRC non-connected state (e.g., RRC_IDLE state or RRC_INACTIVE state), depending on the RAT-dependent positioning technique.

In some embodiments, the first method includes receiving system information from a first cell, where the system information comprising a positioning support indicator that indicates whether the first cell supports a connection to an LMF. In such embodiments, the first method further includes performing cell reselection, where the first cell is excluded from cell reselection consideration when the positioning support indicator indicates that the first cell does not support a connection to the LMF.

In certain embodiments, receiving the system information includes receiving the system information block SIB1, wherein the SIB1 contains the positioning support indicator. In certain embodiments, the first cell is indicated as supporting a connection to the LMF when the first cell has an AMF termination that can forward positioning data to the LMF. In certain embodiments, the first cell is indicated as supporting a connection to the LMF when the first cell has an NRPPa interface for communicating with the LMF.

In some embodiments, the first method includes providing an indication to the LMF for operating in a reduced power mode while in an RRC connected state (e.g., the RRC_CONNECTED state) and receiving a configuration for energy efficient positioning measurements. In one embodiment, the indication provided to the LMF includes a battery level. In certain embodiments, the configuration for energy efficient positioning measurements comprises a configuration for reduced power positioning technique. In certain embodiments, the configuration for energy efficient positioning measurements includes a configuration for measuring fewer PRS resources per resource set or configuring fewer TRPs to be measured.

In some embodiments, the first method includes requesting a PosSIB from a first cell and receiving paging DCI from the first cell, where the paging DCI contains an indication that an updated PosSIB is available. In such embodiments, the first method includes retrieving the updated PosSIB in response to the paging DCI. In certain embodiments, the PosSIB includes a first measurement configuration applicable to an RRC connected state and a second measurement configuration applicable to an RRC non-connected (e.g., RRC_INACTIVE state or RRC_IDLE state).

Disclosed herein is a second apparatus for performing energy efficient positioning, according to embodiments of the disclosure. The second apparatus may be implemented by a location management function in a mobile communication network, such as the LMF 147, the LMF 305, and/or the network apparatus 1700, described above. The second apparatus includes a network interface and a processor that establishes a LPP session with a UE. In response to the network interface receiving an indication from the UE for operating in a reduced power mode, the processor configures the UE for energy efficient positioning measurements.

In some embodiments, the indication provided to the LMF contains a battery level indication for the UE. In some embodiments, the configuration for energy efficient positioning measurements includes a configuration for reduced power positioning technique. In some embodiments, the configuration for energy efficient positioning measurements includes a configuration for measuring fewer PRS resources per resource set or configuring fewer TRPs to be measured.

In some embodiments, the processor sends a location information request message to a UE, the request message containing a measurement configuration and UE autonomous release indication and receives a positioning report from the UE via the LPP session. In such embodiments, the processor receives a UE Autonomous Release signal from the UE, where the UE transmits the UE Autonomous Release signal in response to sending the positioning report and terminates the LPP session in response to the UE Autonomous Release signal.

In certain embodiments, the processor configures the UE with an inactivity timer for tracking an elapsed time from a last transmitted positioning measurement report. In such embodiments, the UE transmits the UE Autonomous Release signal in response to expiry of the inactivity timer (e.g., where the timer reaches a configured threshold). In certain embodiments, the UE Autonomous Release signal is transmitted based on the serving RAN node validation via RAN and LMF coordination.

In some embodiments, the location information request message includes an RRC-state-aware measurement configuration based on at least one RAT-dependent positioning technique. In certain embodiments, the RRC-state-aware measurement configuration includes a first configuration for devices in an RRC connected state and a second configuration for devices not in the RRC connected state. In one embodiment, the second configuration includes a first sub-configuration for devices in an RRC idle state and a second sub-configuration for devices in an RRC inactive state. In certain embodiments, the RRC-state-aware measurement configuration includes at least one of: a DL PRS-RSRP measurement configuration, a DL RSTD measurement configuration, and a UE Rx-Tx time difference measurement configuration to be measured in an RRC connected state or in an RRC non-connected state (e.g., RRC_IDLE state or RRC_INACTIVE state), depending on the RAT-dependent positioning technique.

In some embodiments, the LMF requests a network entity to provide the state-transition notification of the UE between an RRC connected (e.g., RRC_CONNECTED state) state and an RRC non-connected state (e.g., RRC_IDLE state or RRC_INACTIVE state). In such embodiments, the LMF receives a state-transition notification response message from the UE indicating that the UE is in any of the following states: (i) RRC_CONNECTED, (ii) RRC_INACTIVE, (iii) RRC_IDLE.

In certain embodiments, the network entity is one of: an AMF and a RAN node (e.g., gNB). In certain embodiments, the state-transition notification is based on at least one of: a subscription request and an on-demand request. Where the state-transition notification is subscription-based, the processor may further cancel the state-transition notification by the LMF.

Disclosed herein is a second method for performing energy efficient positioning, according to embodiments of the disclosure. The second method may be performed by a location management function device in a mobile communication network, such as the LMF 147, the LMF 305, and/or the network apparatus 1700, described above. The second method includes establishing a LPP session with a UE, receiving an indication to the LMF for operating in a reduced power mode, and configuring the UE for energy efficient positioning measurements.

In some embodiments, the indication provided to the LMF contains a battery level indication of the UE. In some embodiments, the configuration for energy efficient positioning measurements includes a configuration for reduced power positioning technique. In some embodiments, the configuration for energy efficient positioning measurements includes a configuration for measuring fewer PRS resources per resource set or configuring fewer TRPs to be measured.

In some embodiments, the second method includes sending a location information request message to a UE, the request message containing a measurement configuration and UE autonomous release indication. Here, the second method additionally includes receiving a positioning report from the UE via the LPP session and receiving a UE Autonomous Release signal from the UE, where the UE transmits the UE Autonomous Release signal in response to sending the positioning report. In such embodiments, the second method further includes terminating the LPP session in response to the UE Autonomous Release signal.

In certain embodiments, the second method includes configuring the UE with an inactivity timer for tracking an elapsed time from a last transmitted positioning measurement report. In such embodiments, the UE transmits the UE Autonomous Release signal in response to expiry of the inactivity timer (e.g., where the timer reaches a configured threshold). In certain embodiments, the UE Autonomous Release signal is transmitted based on the serving Radio Access Network ("RAN") node validation via RAN and LMF coordination.

In some embodiments, the location information request message includes an RRC-state-aware measurement configuration based on at least one RAT-dependent positioning technique. In certain embodiments, the RRC-state-aware measurement configuration includes a first configuration for devices in an RRC connected state and a second configuration for devices not in the RRC connected state. In one embodiment, the second configuration includes a first sub-configuration for devices in an RRC idle state and a second sub-configuration for devices in an RRC inactive state. In certain embodiments, the RRC-state-aware measurement configuration includes at least one of: a DL PRS-RSRP measurement configuration, a DL RSTD measurement configuration, and a UE Rx-Tx time difference measurement configuration to be measured in an RRC connected state or in an RRC non-connected state (e.g., RRC_IDLE state or RRC_INACTIVE state), depending on the RAT-dependent positioning technique.

In some embodiments, the LMF requests a network entity to provide the state-transition notification of the UE between an RRC connected (e.g., RRC_CONNECTED state) state and an RRC non-connected state (e.g., RRC_IDLE state or RRC_INACTIVE state)e. In such embodiments, the LMF receives a state-transition notification response message from the UE indicating that the UE is in one of the following states: (i) RRC_CONNECTED, (ii) RRC INACTIVE, (iii) RRC IDLE.

In certain embodiments, the network entity is one of: an AMF and a RAN node (e.g., gNB). In certain embodiments, the state-transition notification is based on at least one of: a subscription request and an on-demand request. Where the state-transition notification is subscription-based, the second method may include cancelling the state-transition notification by the LMF.

Embodiments may be practiced in other specific forms. The described embodiments are to be considered in all respects only as illustrative and not restrictive. The scope of the invention is indicated by the appended claims.

## Claims

1. A User Equipment, UE, apparatus (1600) comprising:
a transceiver (1625) arranged to receive a location information request message from a location management function, LMF, the request message comprising a measurement configuration and a UE autonomous release indication; and
a processor (1605) arranged to:
perform positioning measurements according to the measurement configuration;
transmit a positioning report to the LMF; and
transmit a UE Autonomous Release signal to a RAN node in response to transmitting the positioning report, wherein the positioning report is one of a triggered positioning measurement report and a periodic positioning measurement report.

2. The UE apparatus (1600) of claim 1, wherein transmitting the positioning report comprises initiating a Long-term evolution Protocol Positioning, LPP, session with the LMF, wherein the UE Autonomous Release signal is transmitted in response to completing the LPP session.

3. The UE apparatus (1600) of claim 1, wherein the processor (1605) is further arranged to receive an inactivity timer from the LMF, the inactivity timer tracking an elapsed time from a last transmitted positioning measurement report, wherein transmitting the UE Autonomous Release signal occurs in response to expiry of the inactivity timer.

4. The UE apparatus (1600) of claim 1, wherein the measurement configuration comprises a Radio Resource Control, RRC, state-aware measurement configuration based on at least one Radio Access Technology, RAT,-dependent positioning technique.

5. The UE apparatus (1600) of claim 4, wherein the RRC-state-aware measurement configuration comprises a first configuration for devices in an RRC connected state and a second configuration for devices not in the RRC connected state, wherein the second configuration comprises a first sub-configuration for devices in an RRC idle state and a second sub-configuration for devices in an RRC inactive state.

6. The UE apparatus (1600) of claim 4, wherein the RRC-state-aware measurement configuration comprises at least one of: a Downlink, DL, positioning reference signal received power measurement configuration, a DL Reference Signal Time Difference, RSTD, measurement configuration, and a UE Receive-Transmit time difference measurement configuration to be measured in an RRC connected state or in an RRC non-connected state, depending on the RAT-dependent positioning technique.

7. The UE apparatus (1600) of claim 1,
wherein the transceiver (1625) is further arranged to receive system information from a first cell, the system information comprising a first system information block (SIB1) which contains a positioning support indicator that indicates whether the first cell supports a connection to an LMF; and
wherein the processor (1605) is further arranged to perform cell reselection, wherein the first cell is excluded from cell reselection consideration when the positioning support indicator indicates that the first cell does not support a connection to the LMF.

8. The UE apparatus (1600) of claim 1,
wherein the processor (1605) is further arranged to provide an indication to the LMF for operating in a reduced power mode while in an RRC connected state; and
wherein the transceiver (1625) is further arranged to receive a configuration for energy efficient positioning measurements.

9. The UE apparatus (1600) of claim 8, wherein the indication provided to the LMF comprises a battery level, wherein the configuration for energy efficient positioning measurements comprises a configuration for measuring a number of Positioning Reference Signal, PRS, resources per resource set or configuring a number of Transmission-Reception Points, TRPs, to be measured.

10. The UE apparatus (1600) of claim 1, wherein the processor (1605) is further arranged to:
request a Positioning System Information Block, PosSIB, from a first cell;
receive paging downlink control information, DCI, from the first cell, the paging DCI comprising an indication that an updated PosSIB is available; and
retrieve the updated PosSIB in response to the paging DCI, wherein the PosSIB comprises a first measurement configuration applicable to an RRC connected state and a second measurement configuration applicable to an RRC non-connected state.

11. A method (1800) performed by a User Equipment, UE, apparatus, the method (1800) comprising:
receiving (1805) a location information request message from a location management function, LMF, the request message comprising a measurement configuration and a UE autonomous release indication;
performing (1810) positioning measurements according to the measurement configuration;
transmitting (1815) a positioning report to the LMF; and
transmitting (1820) a UE Autonomous Release signal to a RAN node in response to transmitting the positioning report, wherein the positioning report is one of a triggered positioning measurement report and a periodic positioning measurement report.

12. The method (1800) of claim 11, wherein transmitting the positioning report comprises initiating a Long-term evolution Protocol Positioning, LPP, session with the LMF, wherein the UE Autonomous Release signal is transmitted in response to completing the LPP session.

13. The method (1800) of claim 11, further comprising receiving an inactivity timer from the LMF, the inactivity timer tracking an elapsed time from a last transmitted positioning measurement report, wherein transmitting the UE Autonomous Release signal occurs in response to expiry of the inactivity timer.

14. The method (1800) of claim 11, wherein the measurement configuration comprises a Radio Resource Control, RRC, state-aware measurement configuration based on at least one Radio Access Technology, RAT,-dependent positioning technique.

15. The method (1800) of claim 14, wherein the RRC-state-aware measurement configuration comprises a first configuration for devices in an RRC connected state and a second configuration for devices not in the RRC connected state, wherein the second configuration comprises a first sub-configuration for devices in an RRC idle state and a second sub-configuration for devices in an RRC inactive state.

## Patentansprüche

1. Benutzerausrüstungseinrichtung, UE-Einrichtung, (1600), umfassend:
einen Sendeempfänger (1625), der eingerichtet ist, um eine Standortinformationsanforderungsnachricht von einer Standortverwaltungsfunktion, LMF, zu empfangen, wobei die Anforderungsnachricht eine Messungskonfiguration und eine Angabe für eine autonome Freigabe der UE umfasst; und
einen Prozessor (1605), der eingerichtet ist zum:
Durchführen von Positionierungsmessungen gemäß der Messungskonfiguration;
Übertragen eines Positionierungsberichts an die LMF; und
Übertragen eines Signals für die autonome Freigabe der UE an einen RAN-Knoten als Reaktion auf das Übertragen des Positionierungsberichts, wobei es sich bei dem Positionierungsbericht um einen Bericht über ausgelöste Positionierungsmessung oder einen Bericht über periodische Positionierungsmessung handelt.

2. UE-Einrichtung (1600) nach Anspruch 1, wobei das Übertragen des Positionierungsberichts ein Einleiten einer Long-Term-Evolution-Protokollpositionierungssitzung, LPP-Sitzung, mit der LMF umfasst, wobei das Signal für die autonome Freigabe der UE als Reaktion auf ein Abschließen der LPP-Sitzung übertragen wird.

3. UE-Einrichtung (1600) nach Anspruch 1, wobei der Prozessor (1605) ferner eingerichtet ist, um einen Inaktivitätstimer von der LMF zu empfangen, wobei der Inaktivitätstimer eine verstrichene Zeit ab einem zuletzt übertragenen Positionierungsmessungsbericht verfolgt, wobei das Übertragen des Signals für die autonome Freigabe der UE als Reaktion auf ein Ablaufen des Inaktivitätstimers erfolgt.

4. UE-Einrichtung (1600) nach Anspruch 1, wobei die Messungskonfiguration eine Radio-Resource-Control-zustandsbewusste Messungskonfiguration, RRC-zustandsbewusste Messungskonfiguration, umfasst, die auf mindestens einer von Funkzugangstechnologie, RAT, abhängigen Positionierungstechnik basiert.

5. UE-Einrichtung (1600) nach Anspruch 4, wobei die RRC-zustandsbewusste Messungskonfiguration eine erste Konfiguration für Einrichtungen in einem RRC-verbundenen Zustand und eine zweite Konfiguration für Einrichtungen, die sich nicht in dem RRC-verbundenen Zustand befinden, umfasst, wobei die zweite Konfiguration eine erste Unterkonfiguration für Einrichtungen in einem RRC-Leerlaufzustand und eine zweite Unterkonfiguration für Einrichtungen in einem RRC-inaktiven Zustand umfasst.

6. UE-Einrichtung (1600) nach Anspruch 4, wobei die RRC-zustandsbewusste Messungskonfiguration mindestens eines umfasst von: einer Downlink-Positionierungssreferenzsignalempfangsleistungsmessungskonfiguration, DL-Positionierungssreferenzsignalempfangsleistungsmessungskonfiguration, einer DL-Referenzsignalzeitdifferenzmessungskonfiguration, RSTD-Messungskonfiguration, und einer UE-Empfangsübertragungszeitdifferenzmessungskonfiguration, die in einem RRC-verbundenen Zustand oder in einem RRC-nicht-verbundenen Zustand zu messen ist, abhängig von der RAT-abhängigen Positionierungstechnik.

7. UE-Einrichtung (1600) nach Anspruch 1,
wobei der Sendeempfänger (1625) ferner eingerichtet ist, um Systeminformationen von einer ersten Zelle zu empfangen, wobei die Systeminformationen einen ersten Systeminformationsblock (SIB1) umfassen, der einen Positionierungsunterstützungsindikator enthält, der angibt, ob die erste Zelle eine Verbindung zu einer LMF unterstützt; und
wobei der Prozessor (1605) ferner eingerichtet ist, um eine Zellenneuauswahl durchzuführen, wobei die erste Zelle von einer Berücksichtigung für die Zellenneuauswahl ausgeschlossen ist, wenn der Positionierungsunterstützungsindikator angibt, dass die erste Zelle keine Verbindung zu der LMF unterstützt.

8. UE-Einrichtung (1600) nach Anspruch 1,
wobei der Prozessor (1605) ferner eingerichtet ist, um der LMF eine Angabe für einen Betrieb in einem Modus mit reduzierter Leistung bereitzustellen, während er sich in einem RRC-verbundenen Zustand befindet; und
wobei der Sendeempfänger (1625) ferner eingerichtet ist, um eine Konfiguration für energieeffiziente Positionierungsmessungen zu empfangen.

9. UE-Einrichtung (1600) nach Anspruch 8, wobei die der LMF bereitgestellte Angabe einen Batteriestand umfasst, wobei die Konfiguration für energieeffiziente Positionierungsmessungen eine Konfiguration zum Messen einer Anzahl von Positionsreferenzsignal-Ressourcen, PRS-Ressourcen, pro Ressourcensatz oder Konfigurieren einer Anzahl von zu messenden Übertragungsempfangspunkten, TRPs, umfasst.

10. UE-Einrichtung (1600) nach Anspruch 1, wobei der Prozessor (1605) ferner eingerichtet ist zum:
Anfordern eines Positionierungssysteminformationsblocks, PosSIB, von einer ersten Zelle;
Empfangen von Paging-Downlink-Steuerinformationen, Paging-DCI, von der ersten Zelle, wobei die Paging-DCI eine Angabe umfassen, dass ein aktualisierter PosSIB verfügbar ist; und
Abrufen des aktualisierten PosSIB als Reaktion auf die Paging-DCI, wobei der PosSIB eine erste Messungskonfiguration, die auf einen RRC-verbundenen Zustand anwendbar ist, und eine zweite Messungskonfiguration umfasst, die auf einen RRC-nicht-verbundenen Zustand anwendbar ist.

11. Verfahren (1800), das durch eine Benutzerausrüstungseinrichtung, UE-Einrichtung, durchgeführt wird, das Verfahren (1800) umfassend:
Empfangen (1805) einer Standortinformationsanforderungsnachricht von einer Standortverwaltungsfunktion, LMF, wobei die Anforderungsnachricht eine Messungskonfiguration und eine Angabe für die autonome Freigabe der UE umfasst;
Durchführen (1810) von Positionierungsmessungen gemäß der Messungskonfiguration;
Übertragen (1815) eines Positionierungsberichts an die LMF; und
Übertragen (1820) eines Signals für die autonome Freigabe der UE an einen RAN-Knoten als Reaktion auf das Übertragen des Positionierungsberichts, wobei es sich bei dem Positionierungsbericht um einen Bericht über ausgelöste Positionierungsmessung oder einen Bericht über periodische Positionierungsmessung handelt.

12. Verfahren (1800) nach Anspruch 11, wobei das Übertragen des Positionierungsberichts das Einleiten einer Long-Term-Evolution-Protokollpositionierungssitzung, LPP-Sitzung, mit der LMF umfasst, wobei das Signal für die autonome Freigabe der UE als Reaktion auf den Abschluss der LPP-Sitzung übertragen wird.

13. Verfahren (1800) nach Anspruch 11, ferner umfassend das Empfangen eines Inaktivitätstimers von der LMF, wobei der Inaktivitätstimer eine verstrichene Zeit ab einem zuletzt übertragenen Positionierungsmessungsbericht verfolgt, wobei das Übertragen des Signals für die autonome Freigabe der UE als Reaktion auf ein Ablaufen des Inaktivitätstimers erfolgt.

14. Verfahren (1800) nach Anspruch 11, wobei die Messungskonfiguration eine Radio-Resource-Control-zustandsbewusste Messungskonfiguration, RRC-zustandsbewusste Messungskonfiguration, umfasst, die auf mindestens einer von Funkzugangstechnologie, RAT, abhängigen Positionierungstechnik basiert.

15. Verfahren (1800) nach Anspruch 14, wobei die RRC-zustandsbewusste Messungskonfiguration eine erste Konfiguration für Einrichtungen in einem RRC-verbundenen Zustand und eine zweite Konfiguration für Einrichtungen, die sich nicht in dem RRC-verbundenen Zustand befinden, umfasst, wobei die zweite Konfiguration eine erste Unterkonfiguration für Einrichtungen in einem RRC-Leerlaufzustand und eine zweite Unterkonfiguration für Einrichtungen in einem RRC-inaktiven Zustand umfasst.

## Revendications

1. Appareil d'équipement utilisateur, UE, (1600) comprenant :
un émetteur-récepteur (1625) conçu pour recevoir un message de demande d'informations d'emplacement provenant d'une fonction de gestion d'emplacement, LMF, le message de demande comprenant une configuration de mesure et une indication de libération autonome de l'UE ; et
un processeur (1605) conçu pour :
réaliser des mesures de positionnement selon la configuration de mesure ;
transmettre un rapport de positionnement à la LMF ; et
transmettre un signal de libération autonome de l'UE à un noeud RAN en réponse à la transmission du rapport de positionnement, dans lequel le rapport de positionnement est l'un parmi un rapport de mesure de positionnement déclenché ou un rapport de mesure de positionnement périodique.

2. Appareil UE (1600) selon la revendication 1, dans lequel la transmission du rapport de positionnement comprend le lancement d'une session de positionnement par protocole d'évolution à long terme, LPP, avec la LMF, dans lequel le signal de libération autonome de l'UE est transmis en réponse à l'achèvement de la session LPP.

3. Appareil UE (1600) selon la revendication 1, dans lequel le processeur (1605) est en outre conçu pour recevoir un temporisateur d'inactivité de la LMF, le temporisateur d'inactivité suivant un temps écoulé depuis un dernier rapport de mesure de positionnement transmis, dans lequel la transmission du signal de libération autonome de l'UE a lieu en réponse à l'expiration du temporisateur d'inactivité.

4. Appareil UE (1600) selon la revendication 1, dans lequel la configuration de mesure comprend une configuration de mesure tenant compte de l'état de commande de ressources radio, RRC, basée sur au moins une technique de positionnement dépendant de la technologie d'accès radio, RAT.

5. Appareil UE (1600) selon la revendication 4, dans lequel la configuration de mesure tenant compte de l'état RRC comprend une première configuration pour des dispositifs dans un état connecté RRC et une seconde configuration pour des dispositifs qui ne sont pas dans l'état connecté RRC, dans lequel la seconde configuration comprend une première sous-configuration pour des dispositifs dans un état de repos RRC et une seconde sous-configuration pour des dispositifs dans un état inactif RRC.

6. Appareil UE (1600) selon la revendication 4, dans lequel la configuration de mesure tenant compte de l'état RRC comprend au moins l'une parmi une configuration de mesure de puissance reçue du signal de référence de positionnement de liaison descendante, DL, une configuration de mesure de différence temporelle du signal de référence, RSTD, DL et une configuration de mesure de la différence temporelle réception-transmission de l'UE à mesurer dans un état connecté RRC ou dans un état non connecté RRC, en fonction de la technique de positionnement dépendant de la RAT.

7. Appareil UE (1600) selon la revendication 1,
dans lequel l'émetteur-récepteur (1625) est en outre conçu pour recevoir des informations système d'une première cellule, les informations système comprenant un premier bloc d'informations système (SIB1) qui contient un indicateur de prise en charge de positionnement indiquant si la première cellule prend en charge une connexion à une LMF ; et
dans lequel le processeur (1605) est en outre conçu pour réaliser une nouvelle sélection de cellules, dans lequel la première cellule est exclue de la nouvelle sélection de cellules lorsque l'indicateur de prise en charge de positionnement indique que la première cellule ne prend pas en charge une connexion vers la LMF.

8. Appareil UE (1600) selon la revendication 1,
dans lequel le processeur (1605) est en outre conçu pour fournir une indication à la LMF afin qu'il fonctionne dans un mode de consommation réduite alors qu'il se trouve dans un état de connexion RRC ; et
dans lequel l'émetteur-récepteur (1625) est en outre conçu pour recevoir une configuration pour des mesures de positionnement à faible consommation d'énergie.

9. Appareil UE (1600) selon la revendication 8, dans lequel l'indication fournie à la LMF comprend un niveau de batterie, dans lequel la configuration pour des mesures de positionnement à faible consommation d'énergie comprend une configuration destinée à mesurer un nombre de ressources de signal de référence de positionnement, PRS, par ensemble de ressources ou la configuration d'un nombre de points de transmission-réception, TRP, à mesurer.

10. Appareil UE (1600) selon la revendication 1, dans lequel le processeur (1605) est en outre agencé pour :
demander à une première cellule un bloc d'informations sur le système de positionnement, PosSIB ;
recevoir des informations de commande de liaison descendante de radiomessagerie, DCI, de la première cellule, les DCI de radiomessagerie comprenant une indication qu'un PosSIB mis à jour est disponible ; et
récupérer le PosSIB mis à jour en réponse aux DCI de radiomessagerie, dans lequel le PosSIB comprend une première configuration de mesure applicable à un état de connexion RRC et une seconde configuration de mesure applicable à un état de non-connexion RRC.

11. Procédé (1800) réalisé par un appareil d'équipement utilisateur,UE, le procédé (1800) comprenant :
la réception (1805) d'un message de demande d'informations d'emplacement provenant d'une fonction de gestion d'emplacement, LMF, le message de demande comprenant une configuration de mesure et une indication de libération autonome de l'UE ;
la réalisation (1810) de mesures de positionnement selon la configuration de mesure ;
la transmission (1815) du mot de code CSI à la LMF ; et
la transmission (1820) d'un signal de libération autonome de l'UE à un noeud RAN en réponse à la transmission du rapport de positionnement, dans lequel le rapport de positionnement est l'un parmi un rapport de mesure de positionnement déclenché ou un rapport de mesure de positionnement périodique.

12. Procédé (1800) selon la revendication 11, dans lequel la transmission du rapport de positionnement comprend le lancement d'une session de positionnement par protocole d'évolution à long terme, LPP, avec la LMF, dans lequel le signal de libération autonome de l'UE est transmis en réponse à l'achèvement de la session LPP.

13. Procédé (1800) selon la revendication 11, comprenant en outre la réception d'un temporisateur d'inactivité de la LMF, le temporisateur d'inactivité suivant un temps écoulé depuis un dernier rapport de mesure de positionnement transmis, dans lequel la transmission du signal de libération autonome de l'UE a lieu en réponse à l'expiration du temporisateur d'inactivité.

14. Procédé (1800) selon la revendication 11, dans lequel la configuration de mesure comprend une configuration de mesure de commande des ressources radio, RRC, basée sur au moins une technique de positionnement dépendant de la technologie d'accès radio, RAT.

15. Procédé (1800) selon la revendication 14, dans lequel la configuration de mesure tenant compte de l'état RRC comprend une première configuration pour les dispositifs dans un état connecté RRC et une seconde configuration pour les dispositifs qui ne sont pas dans l'état connecté RRC, dans lequel la seconde configuration comprend une première sous-configuration pour des dispositifs dans un état de repos RRC et une seconde sous-configuration pour des dispositifs dans un état inactif RRC.
